# EUROPÄISCHE PATENTSCHRIFT

(11) **EP 3 864 401 B1**
(45) Veröffentlichungstag und Bekanntmachung des Hinweises auf die Patenterteilung: **04.10.2023**
(21) Anmeldenummer: 19786539.7
(22) Anmeldetag: 08.10.2019
(51) Int. Cl.: G01N 27/20, B21B 38/00, F16C 17/24, F16D 66/02

(54) **VORRICHTUNG UND VERFAHREN ZUM MESSEN EINES VERSCHLEISSZUSTANDS VON GLEITLAGER- ODER FÜHRUNGSELEMENTEN**
DEVICE AND METHOD FOR MEASURING A STATE OF WEAR OF PLAIN BEARING ELEMENTS OR GUIDE ELEMENTS
DISPOSITIF ET PROCÉDÉ DE MESURE D'UN ÉTAT D'USURE D'ÉLÉMENTS DE ROULEMENT OU DE GUIDAGE

(30) Priorität: 08.10.2018 DE 102018217133
(43) Veröffentlichungstag der Anmeldung: 18.08.2021
(73) Patentinhaber: SMS Group GmbH, 40237 Düsseldorf (DE)
(72) Erfinder: HASCHKE, Thomas, 57319 Bad Berleburg (DE); MÜLLER, Torsten, 57223 Kreuztal (DE); ALKEN, Johannes, 57076 Siegen (DE); HUGE, Thorsten, 57223 Kreuztal (DE); KIPPING, Matthias, 57562 Herdorf (DE)
(74) Vertreter: Kross, Ulrich
(86) Internationale Anmeldenummer: PCT/EP2019/077232
(87) Internationale Veröffentlichungsnummer: WO 2020/074519

(56) Entgegenhaltungen:
- EP-A1- 2 637 014
- WO-A1-02/075271
- DE-A1- 2 115 506
- DE-A1-102008 053 184
- JP-A- 2013 088 173
- US-A1- 2007 163 325
- JOSEPH DAVIDSON ET AL: "Recent Advances in Energy Harvesting Technologies for Structural Health Monitoring Applications", SMART MATERIALS RESEARCH, Bd. 2014, 13. April 2014 (2014-04-13), Seiten 1-14, XP055654212, ISSN: 2090-3561, DOI: 10.1155/2014/410316

## Beschreibung

Die Erfindung betrifft ein Gleitlager- oder Führungselement in Form einer Sensorplatte für Walzgerüste, und eine Vorrichtung und ein Verfahren zum Messen eines Verschleißzustands an der Gleitlagerfläche einer Sensorplatte.

Nach dem Stand der Technik sind aus DE 10 2017 205 886 A1 und beispielsweise auch aus DE 21 15 506 A jeweils eine Vorrichtung und ein Verfahren zum Bestimmen des Verschleißes an einer Verschleißfläche bekannt. Hierbei kommt ein Verschleißsensor in Form eines elektrischen Widerstands zum Einsatz, welcher bei dem Materialabtrag an der Verschleißfläche selber mechanisch mit abgetragen wird. Bei DE 10 2017 205 886 A1 können zur Gewinnung eines besseren Überblicks über die Verteilung der Verschleißschichtdicke bzw. des Materialabtrags über der Verschleißfläche in der Verschleißschicht mehrere Verschleißsensoren verteilt angeordnet sein. Aus JP 2013 088173 A ist eine Sensorplatte nach dem Oberbegriff von Anspruch 1 bekannt, die bei einer industriellen Maschine zum Einsatz kommen kann.

WO 02/075271 A zeigt ein Lagerelement sowie eine Messvorrichtung zum Ermitteln des Verschleiß-Zustandes von Lagerelementen. Das Lagerelement kann als plattenförmiges Gleitlager- oder Führungselement für Walzgerüste dienen und weist eine Gleitlagerfläche auf, die im Betrieb von Walzgerüsten einem Verschleiß unterliegt. In dem Lagerelement ist eine Messbohrung ausgebildet, die sich von der Gleitlagerfläche in das Innere des Lagerelements hinein erstreckt. Mittels einer geeigneten Tiefenmessvorrichtung, die in dieser Messbohrung angeordnet sein kann, ist es möglich, eine Stärke des Lagerelements und somit dessen Verschleißzustand "über der Tiefe" zu bestimmen.

In dem Artikel von Joseph Davidson et.al.: "*Recent Advances in Energy Harvesting Technologies for Structural Health Monitoring Applications"*) ist es bekannt, dass Überwachungssysteme von einer autonomen Energiequelle gespeist werden, wobei diese Energie beispielsweise aus lokalen Druckverhältnissen, Vibrationen, thermischen Gradienten oder dergleichen gewonnen wird.

Aus EP 2 637 014 A1 und US 2007/163325 A1 sind jeweils Messvorrichtungen zur Bestimmung eines Verschleißzustands an einer Gleitlagerfläche bekannt, wobei eine Mehrzahl von Verschleißsensoren eingesetzt wird.

Der Erfindung liegt die Aufgabe zugrunde, die Verschleißmessung an einem Gleitlager- oder Führungselement zu optimieren und damit auch die Produktionsplanung beim Einsatz von Walzgerüsten zu verbessern.

Diese Aufgabe wird durch eine Sensorplatte mit den Merkmalen von Anspruch 1, durch eine Vorrichtung mit den in Anspruch 12 angegebenen Merkmalen und durch Verfahren mit den Merkmalen von Anspruch 16 bzw. 19 gelöst. Vorteilhafte Weiterbildungen der Erfindung sind in den abhängigen Ansprüchen definiert.

Eine Sensorplatte nach der vorliegenden Erfindung dient als Gleitlager- oder Führungselement für Walzgerüste, und umfasst mindestens eine mit einem Bauteil in Kontakt bringbare und in einem Betrieb eines Walzgerüsts einem Verschleiß unterliegende Gleitlagerfläche und mehrere Verschleißsensoren. Die Verschleißsensoren sind zum Erfassen eines Materialabtrags an der Gleitlagerfläche geeignet und umfassen hierzu jeweils einen elektrischen Widerstand, der aus mindestens einem elektrischen Leiter gebildet ist, welcher vorzugsweise abschnittsweise parallel zu der Gleitlagerfläche verlaufend angeordnet ist, wobei die Verschleißsensoren bei einem Materialabtrag an der Gleitlagerfläche selber mechanisch mit abgetragen werden. Konkret sind die Verschleißsensoren in Form einer (m x n)-Matrix angeordnet, wobei die Verschleißsensoren jeweils zumindest einen elektrischen Leiter oder mehrere elektrische Leiter umfassen, wobei jeder elektrische Leiter mit einem Abschnitt hiervon parallel zur Gleitlagerfläche verläuft und die Mehrzahl von elektrischen Leitern jeweils verschiedene Abstände zur Gleitlagerfläche aufweisen, wobei die Parameter m und/oder n zumindest den Zahlenwert von 2 oder einen Wert > 2 annehmen. Des Weiteren sind eine Mehrzahl von Messsensoren vorgesehen, die in die Sensorplatte integriert aufgenommen und in Form einer (a x b)-Matrix angrenzend zur Gleitlagerfläche angeordnet sind, derart, dass die Messsensoren einerseits nicht dem Verschleiß an der Gleitlagerfläche unterworfen sind und andererseits in der Lage sind, die auf die Sensorplatte wirkenden Kräfte und/oder Dehnungen und/oder Verformungen, die in Folge eines Flächen-, Linien- oder Punktkontakts der Sensorplatte mit dem Bauteil entstehen, zu erfassen, wobei die Parameter a und b, mit denen die (a x b)-Matrix für die Anordnung der Messsensoren gebildet ist, jeweils aus ganzzahligen Werten bestehen, die aus dem Zahlenbereich {1-100} gewählt sind.

Die vorliegende Erfindung sieht weiterhin eine Vorrichtung zum Messen eines Verschleißzustands an der Gleitlagerfläche einer Sensorplatte vor, und umfasst eine Messeinrichtung, welche die in die Gleitlagerfläche integrierten Verschleißsensoren der im vorherigen Absatz genannten Sensorplatte aufweist, um bei einem Verschleiß den Materialabtrag an der Gleitlagerfläche zu erfassen. Des Weiteren umfasst die Vorrichtung eine mit den Verschleißsensoren bzw. Messsensoren zumindest in Signalverbindung stehende Auswerteeinrichtung, von der die Signalwerte der Sensoren und insbesondere der einzelnen Verschleißsensoren empfangbar sind. Hierbei ist die Auswerteeinrichtung programmtechnisch derart eingerichtet, dass damit eine Änderung, insbesondere einer Erhöhung, des Ohm'schen Widerstandswertes des elektrischen Leiters eines bestimmten Verschleißsensors in Abhängigkeit seines eigenen Materialabtrags erfasst werden kann, um hierdurch einen Rückschluss von der erkannten Änderung des Widerstandwertes auf die Größe des Materialabtrags an der Gleitlagerfläche und/oder auf die verbleibende Dicke der Gleitlagerfläche an der Stelle dieses bestimmten Verschleißsensors zu gewährleisten.

Unter Verwendung der vorstehend genannten Vorrichtung sieht die vorliegende Erfindung auch ein Verfahren zum Messen eines Verschleißzustands von Gleitlager- oder Führungselementen im Betrieb eines Walzgerüsts vor, bei dem insbesondere die vorstehend genannte Vorrichtung zum Einsatz kommt. Dieses Verfahren umfasst die Schritte:
(i) Bestimmen eines Verschleißzustands an einer Sensorplatte nach Anspruch 10 und einer aktuellen Geometrie (Topographie) der zugehörigen Gleitlagerfläche,
(ii) Bestimmen eines Verschleißzustands an einer Sensorplatte nach Anspruch 11 und einer aktuellen Geometrie (Topographie) der zugehörigen Gleitlagerfläche,
(iii) Durchführen der Schritte (i) und (ii) für alle Sensorplatten, die an den Einbaustücken von Walzen und an den Walzenständern des Walzgerüsts angebracht sind,
(iv) Übertragen der Messwerte von Schritt (iii) an ein Zentralsystem mit einer Speicher- und Auswerteeinheit, wobei diese Messwerte jeweils zu einem bestimmten Walzensatz, der aus einer bestimmten Walze, den dafür vorgesehenen Einbaustücken und der daran angebrachten Sensorplatte nach Anspruch 10 besteht, und zu einem bestimmten Walzenständer des Walzgerüsts mit einer Sensorplatte nach Anspruch 11 zugeordnet werden.

Der Erfindung liegt zunächst die wesentliche Erkenntnis zugrunde, dass es mit Hilfe der charakteristischen Integration von mehreren Verschleißsensoren in Form einer (m x n)-Matrix in die Gleitlagerfläche einer Sensorplatte möglich ist, bezüglich des Verschleißes an der Gleitlagerfläche dieser Sensorplatte im Vergleich zum Stand der Technik eine präzisere Information zu gewinnen. Basierend hierauf ist es mit der vorliegenden Erfindung des Weiteren möglich, mittels einer geeigneten Messdaten-Analyse in einem Rechner- bzw. Zentralsystem mit einer Speicher- und Auswerteeinheit sogenannte "matching-partner" zwischen einerseits bestimmten Walzensätzen (bestehend aus Walzen, den zugehörigen Einbaustücken und den daran befestigten Sensorplatten) und andererseits bestimmten Walzenständern eines Walzgerüsts zu ermitteln, nämlich im Hinblick auf den Verschleißzustand der zugehörigen Sensorplatten und deren jeweiliger "Topographie" an deren Gleitoberflächen.

In vorteilhafter Weiterbildung der Erfindung kann vorgesehen sein, dass der elektrische Widerstand eines Verschleißsensors aus einer Mehrzahl elektrischer Leiter gebildet ist, welche vorzugsweise zumindest abschnittsweise parallel und in unterschiedlichen Tiefen in Bezug auf die Gleitlagerfläche angeordnet sind. Hiermit ist es möglich, mit preiswerten Mitteln und gleichzeitig einer großen Genauigkeit verschiedene Verschleißgrenzen mit einem einzigen Typ von Verschleißsensor an der Gleitoberfläche einer Sensorplatte zu überwachen.

Die erfindungsgemäße Sensorplatte ist nicht nur mit einer Mehrzahl von Verschleißsensoren in deren Gleitoberfläche bestückt, sondern zusätzlich mit einer Mehrzahl von Messsensoren , die in Form einer (a x b)-Matrix angrenzend zur Gleitlagerfläche angeordnet sind. Hierbei sind diese Messsensoren derart angrenzend zur Gleitoberfläche einer Sensorplatte angeordnet, dass sie einerseits nicht dem Verschleiß an der Gleitlagerfläche unterworfen sind, andererseits jedoch in der Lage sind, die auf die Sensorplatte wirkenden Kräfte und/oder Dehnungen und/oder Verformungen, die in Folge eines Flächen-, Linien- oder Punktkontakts der Sensorplatte mit dem Bauteil entstehen, zu erfassen.

An dieser Stelle wird gesondert darauf hingewiesen, dass es sich im Sinne der vorliegenden Erfindung bei einem Messsensor um einen Sensor handelt, der in der Lage ist, Kräfte und/oder Dehnungen und/oder Deformationen zu erfassen, die bei bzw. an einem plattenförmigen Element in Form der erfindungsgemäßen Sensorplatte auftreten können, wenn diese Sensorplatte im Betrieb eines Walzgerüsts bzw. einer Walzstraße in Kontakt mit einem anderen Bauteil gelangt.

Die soeben genannten Messsensoren, mit denen eine erfindungsgemäße Sensorplatte zusätzlich ausgerüstet sein kann, sind innerhalb der Sensorplatte und vorzugsweise angrenzend zu deren Gleitlagerfläche angeordnet. Dies bedeutet, dass damit ein solcher Messsensor geeignet in die Sensorplatte integriert ist. Von Bedeutung hierbei ist, dass dabei der Messsensor nicht unmittelbar an der Gleitlagerfläche der Sensorplatte exponiert angeordnet ist, so dass der Messsensor im Betrieb eines Walzgerüsts, bei dem die Sensorplatte zum Einsatz kommt, bei einem Verschleiß der Gleitlagerfläche keinen Schaden nimmt bzw. nicht zerstört wird

In vorteilhafter Weiterbildung der Erfindung kann eine Anordnung der Messsensoren innerhalb der Sensorplatte dadurch erfolgen, dass in der Sensorplatte eine Mehrzahl von Sacklochbohrungen ausgebildet sind. Die Messsensoren sind dann innerhalb dieser Sacklochbohrungen aufgenommen bzw. eingesetzt. Diesbezüglich versteht sich, dass bei der Herstellung einer solchen Sensorplatte die Sacklochbohrungen in die Sensorplatte von einer der Gleitlagerfläche entgegengesetzten Rückseite her eingebracht werden können. Ergänzend und/ oder alternativ hierzu ist es auch möglich, eine solche Sacklochbohrung von einer seitlichen Randfläche der Sensorplatte her einzubringen. Die Richtung, aus der eine jeweilige Sacklochbohrung für die Aufnahme eines Messsensors in die Sensorplatte im Zuge von deren Herstellung eingebracht wird, ist jeweils von den konkreten Abmessungen einer Sensorplatte und deren Einbau in einem Walzgerüst abhängig.

In vorteilhafter Weiterbildung der Erfindung können die Parameter m und n, mit denen die (m x n)-Matrix für die Anordnung der Verschleißsensoren gebildet ist, und die Parameter a und b, mit denen die (a x b)-Matrix für die Anordnung der Messsensoren gebildet ist, jeweils aus ganzzahligen Werten bestehen, derart, dass damit die Matrix-Anordnung der Verschleißsensoren bzw. der Messsensoren an die Umfangskontur der Sensorplatte angepasst ist. Diesbezüglich versteht sich, dass ein Bestimmen des Verschleißzustands einer Sensorplatte und deren "Topographie" in Bezug auf die Abnutzung umso genauer bzw. präziser ist, je größer die Parameter m und n für die Matrix-Anordnung der Verschleißsensoren gewählt sind. Dies begründet sich mit der größeren Flächenabdeckung an der Gleitlagerfläche durch die darin integrierten Verschleißsensoren. Die korrespondierende Abdeckung der Gleitlagerfläche durch die daran angrenzend angeordneten Messsensoren ermöglicht hierbei ergänzende Messwerte, mit denen die gewonnenen Verschleißwerte der Verschleißsensoren verifiziert werden kann.

Beispielsweise können die Messsensoren bzw. Verschleißsensoren in Form einer 2 x 2-Matrix, in Form einer 3 x 2-Matrix, in Form einer 3 x 1-Matrix, in Form einer 3 x 3-Matrix, in Form einer 4 x 4-Matrix, in Form einer 5 x 5-Matrix, in Form einer 6 x 6-Matrix, in Form einer 6 x 4-Matrix, in Form einer 7 x 7-Matrix, in Form einer 8 x 8-Matrix, in Form einer 9 x 9-Matrix, in Form einer 10 x 10-Matrix, in Form einer 11 x 11-Matrix oder in Form einer 12 x 12-Matrix angeordnet sein.

In vorteilhafter Weiterbildung der Erfindung kann an der Sensorplatte zumindest ein maschinenlesbarer Datenspeicher angebracht bzw. vorgesehen sein, in dem Signal- bzw. Messwerte der Verschleißsensoren gespeichert werden können. In gleicher Weise können in diesem Datenspeicher auch die Messwerte der Messsensoren abgelegt werden, falls solche ergänzend in die Gleitlagerfläche einer Sensorplatte integriert sind.

Zur Übertragung der Messwerte, die beispielsweise in dem vorstehend genannten Datenspeicher abgelegt worden sind, an einen externen Kommunikationspartner ist es zweckmäßig, wenn die Sensorplatte mit einer Sendeeinheit ausgestattet ist, die in jedem Fall mit den Verschleißsensoren, und ggf. auch mit den optional vorgesehenen Messsensoren, in Signalverbindung steht. Hierbei kann die Übertragung der Messwerte der Sensoren über eine Funkstrecke oder kabelgebunden an eine Auswerteeinrichtung erfolgen.

Im Hinblick auf eine räumliche Zuordnung der gewonnenen Messwerte insbesondere der Verschleißsensoren ist die Kenntnis zweckmäßig, an welcher Stelle in einem Walzgerüst diese Sensorplatten verbaut bzw. montiert sind, beispielsweise an welchem Walzensatz oder an welchem konkreten Walzenständer. Zu diesem Zweck sieht eine vorteilhafte Weiterbildung der Erfindung vor, dass die Sensorplatten jeweils mit einem Datenträger mit einer maschinenlesbaren Kennung ausgestattet sind, mittels der die Sensorplatte eindeutig identifizierbar und deren Position im Walzgerüst lokalisierbar ist. Beispielsweise kann ein solcher Datenträger aus einem RFID-Transponder, aus einem NFC (Near-Field-Communication)-Element und/oder aus einem QR-Code gebildet sein. In dieser Weise ist für die in einem Walzgerüst verbauten Sensorplatten eine eindeutige Identifizierung in Verbindung mit einer entsprechenden Lokalisierung gewährleistet.

An dieser Stelle wird gesondert darauf hingewiesen, dass es beispielsweise im Zuge eines Umrüstens eines Walzgerüsts möglich ist, ein Einbaustück von einer Walze zu demontieren und gegen eines anderes Einbaustück auszutauschen. In dieser Hinsicht versteht sich, dass die vorstehend genannte eindeutige Identifizierbarkeit bzw. Lokalisierung für eine Sensorplatte, die dank des Datenträgers mit einer maschinenlesbaren Kennung (z.B. RFID-Transponder, NFC und/oder QR-Code) möglich ist, sich stets auf ein bestimmtes Einbaustück bezieht, an dem eine bestimmte Sensorplatte angebracht bzw. befestigt ist. In der Regel werden nämlich solche Sensorplatten, jedenfalls solange sie funktionieren und nicht übermäßig verschlissen sind, nicht von einem zugeordneten Einbaustück demontiert.

Wie bereits erläutert, kann sich für eine erfindungsgemäße Sensorplatte empfehlen, dass sie an einem Einbaustück einer Walze befestigt ist. Dies ist in gleicher Weise für eine Arbeitswalze und/oder für eine Stützwalze möglich, kurzum für eine beliebige Walze in einem Walzgerüst.

Ergänzend und/oder alternativ empfiehlt sich, dass eine erfindungsgemäße Sensorplatte an einem Walzenständer eines Walzgerüsts befestigt ist.

In vorteilhafter Weiterbildung kann für die erfindungsgemäße Vorrichtung vorgesehen sein, dass deren Auswerteeinrichtung in Signalverbindung mit einem Zentralsystem mit einer Speicher- und Auswerteeinheit steht. Hierbei können die Daten der Auswerteeinrichtung an das Zentralsystem über eine Signalstrecke übertragen und anschließend darin ausgewertet werden. Zur Realisierung der Datenübertragung ist es zweckmäßig, dass die Auswerteeinrichtung mit einem Kommunikationsmodul ausgestattet ist, mit dem für die Auswerteeinrichtung ein Datenaustausch mit dem Zentralsystem und/oder mit externen Kommunikationspartnern möglich ist.

Im Hinblick auf eine Auswertung der Daten innerhalb des Zentralsystems ist dessen Auswerteeinheit programmtechnisch derart eingerichtet, dass damit eine Änderung, insbesondere einer Erhöhung, des Ohm'schen Widerstandswertes des elektrischen Leiters eines bestimmten Verschleißsensors in Abhängigkeit seines eigenen Materialabtrags erfasst werden kann, um hierdurch einen Rückschluss von der erkannten Änderung des Widerstandwertes auf die Größe des Materialabtrags an der Gleitlagerfläche und/oder auf die verbleibende Dicke der Gleitlagerfläche an der Stelle dieses bestimmten Verschleißsensors zu gewährleisten.

In Bezug auf das vorstehend genannte erfindungsgemäßen Verfahren ist es weiterhin zweckmäßig, dass der aktuelle Verschleißzustand bzw. die aktuelle Topographie von Sensorplatten für eine Paarung bestehend aus einem bestimmten Walzensatz und einem bestimmten Walzenständer mit einem ersten vorbestimmten Grenzwert verglichen wird, wobei bei Überschreiten dieses ersten vorbestimmten Grenzwerts zumindest ein Warnsignal zur Veranlassung einer Überprüfung bzw. Wartung des Walzgerüsts und/oder des Walzensatzes ausgelöst wird. Im Zuge dessen ist auch die Festlegung eines zweiten vorbestimmten Grenzwertes möglich, bei dessen Überschreitung dann zumindest ein Warnsignal für einen Betriebsstopp des Walzgerüsts ausgelöst wird oder ggf. auch automatisch ein Notstopp für die Walzanlage eingeleitet wird.

Die vorliegende Erfindung stellt darauf ab, für ein Walzgerüst eine "intelligente Verschleißmessung" zu schaffen, mit der praktisch zu jedem Zeitpunkt und "online", d.h. auch während des laufenden Walzbetriebs bestimmt werden kann, welcher Verschleißzustand bzw. Abnutzungsgrad sich an welcher Sensorplatte aktuell eingestellt hat. Hierbei wirkt sich die Anordnung der Mehrzahl von Verschleißsensoren in Form einer (m x n)-Matrix vorteilhaft aus, dank der damit möglichen dichten bzw. lückenlosen Anordnung der Verschleißsensoren über den gesamten Bereich der Gleitlagerfläche einer Sensorplatte.

Der Einsatz der vorliegenden Erfindung eignet sich insbesondere bei Grobblechgerüsten, bei Vielwalzengerüsten (z.B. Sendzimir-Gerüste) oder bei Warm- oder Kaltwalzstraßen.

Nachstehend sind Ausführungsbeispiele der Erfindung anhand einer schematisch vereinfachten Zeichnung im Detail beschrieben.

Es zeigen:
Fig. 1 eine Draufsicht auf eine Sensorplatte, und eine Darstellung einer Vorrichtung mit einer solchen Sensorplatte,
Fig. 2 eine Querschnittsansicht eines Teils der Sensorplatte von Fig. 1,
Fig. 3-6 weitere Ausführungsformen einer Sensorplatte, jeweils in Draufsicht,
Fig. 7-16 weitere Details der Sensorplatte von Fig. 1, die in Fig. 1-16 gezeigten Beispiele zeigen keine erfindungsgemäße Sensorplatte bzw. Vorrichtung,
Fig. 17 eine Ausführungsform einer erfindungsgemäßen Sensorplatte, in Draufsicht,
Fig. 18 eine Querschnittsansicht eines Teils der Sensorplatte von Fig. 17,
Fig. 19 einen Walzensatz bestehend aus Stütz- und Arbeitswalzen inklusive
Einbaustücken, jeweils in einer Seitenansicht und einer Ansicht von vorne, Fig. 20 einen Walzenständer, jeweils in einer Perspektivansicht und in einer
Seitenansicht, an dem erfindungsgemäße Sensorplatten befestigt sind, und Fig. 21 die Schrittabfolge eines erfindungsgemäßen Verfahrens.

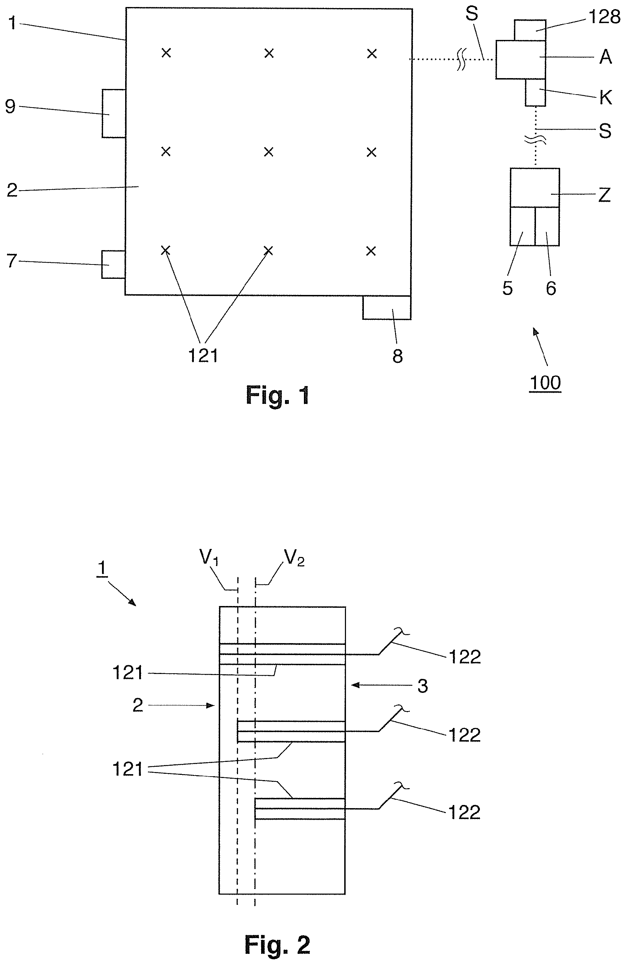

Fig. 1-16 zeigen beispielhafte Sensorplatten, die nicht erfindungsgemäß sind aber zur Veranschaulichung des Prinzips der vorliegenden Erfindung nützlich sind.

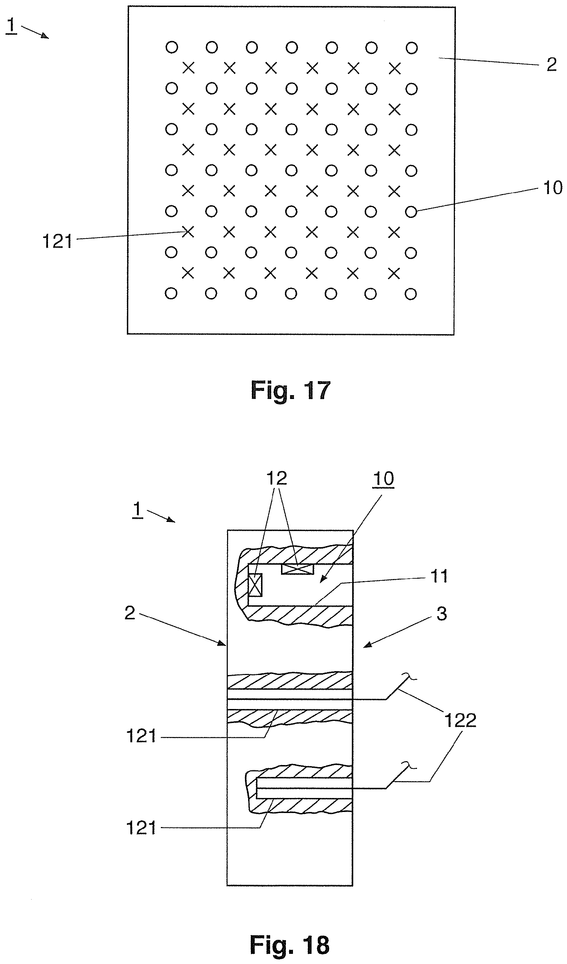

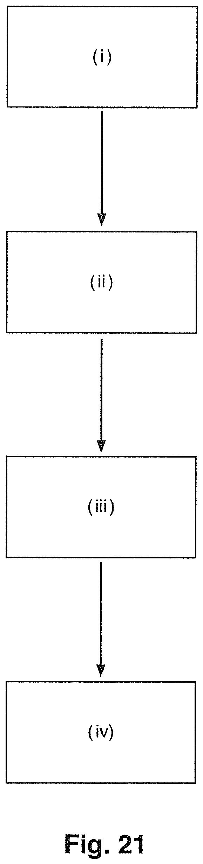

Nachstehend sind unter Bezugnahme auf die Fig. 17-20 Ausführungsformen einer Sensorplatte 1 und einer Vorrichtung 100 gemäß der vorliegenden Erfindung dargestellt und erläutert, mit der ein Verschleißzustand an der Gleitlagerfläche einer Sensorplatte gemessen werden kann. Des Weiteren verdeutlicht das Flussdiagramm von Fig. 21 den Ablauf eines erfindungsgemäßen Verfahrens. Gleiche Merkmale in der Zeichnung sind jeweils mit gleichen Bezugszeichen versehen. An dieser Stelle wird gesondert darauf hingewiesen, dass die Zeichnung lediglich vereinfacht und insbesondere ohne Maßstab dargestellt ist.

Fig. 1 zeigt eine Draufsicht auf eine Sensorplatte 1. Diese Sensorplatte kann als Gleitlager- oder Führungselement für Walzgerüste dienen. Hierzu weist die Sensorplatte 1 an einer Seite eine Gleitlagerfläche 2 auf. Wenn die Sensorplatte 1 in einem Walzgerüst montiert ist, beispielsweise an dem Einbaustück einer Arbeits- oder Stützwalze oder an einem Walzenständer eines Walzgerüsts, kann die Gleitlagerfläche 2 der Sensorplatte 1 in Kontakt mit einem daran angrenzenden Bauteil gelangen und hierbei einem Verschleiß unterliegen.

Die Sensorplatte 1 ist mit einer Mehrzahl von Verschleißsensoren 121 ausgestattet. Diese Verschleißsensoren 121 sind in der Draufsicht von Fig. 1 vereinfachend jeweils mit einem "x" symbolisiert. Die Verschleißsensoren 121 sind entweder direkt in die Gleitlagerfläche 2 integriert, oder verlaufen angrenzend zur Gleitlagerfläche 2.

Die Verschleißsensoren 121 sind in Form einer (m x n)-Matrix verteilt über die Gleitlagerfläche 2 angeordnet, wobei der Parameter m die Anzahl der Verschleißsensoren 121 in vertikaler Richtung und der Parameter n die Anzahl der Verschleißsensoren in horizontaler Richtung bestimmt. Die Parameter m und n für die Matrix-Anordnung der Verschleißsensoren 121 können aus dem Zahlenbereich von {1-100} gewählt sein, in beliebiger Kombination miteinander.

Bei dem gezeigten Beispiel von Fig. 1 sind die Verschleißsensoren in Form einer 3 x 3-Matrix in die Gleitlagerfläche 2 der Sensorplatte 1 integriert.

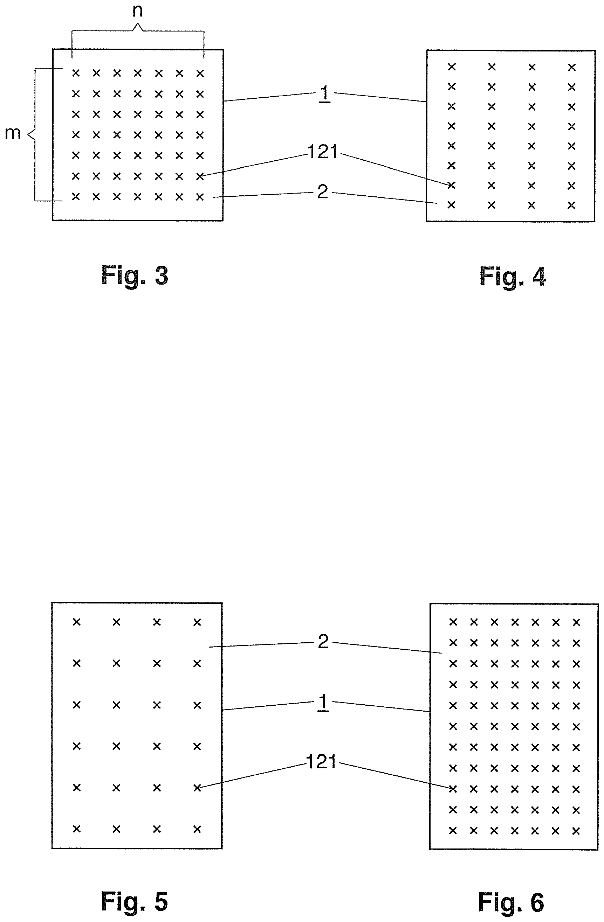

In den Fig. 3-6 sind weitere Beispiele für eine Sensorplatte 1 jeweils in Draufsicht gezeigt. In gleicher Weise wie bei der Darstellung von Fig. 3 sind in den Fig. 3-6 die Verschleißsensoren jeweils durch ein "x" symbolisiert. Fig. 3 verdeutlicht mit den Buchstaben m und n nochmals die Logik einer Matrix-Anordnung für die Verschleißsensoren: Mit dem Parameter "m" sind die Reihen der Messsensoren 10 in vertikaler Ausrichtung definiert (= "Zeilen"), wobei mit dem Parameter "n" die Reihen der Messsensoren in horizontaler Ausrichtung (= "Spalten") definiert sind.

Bei der Darstellung von Fig. 3 sind die Verschleißsensoren 121 in Form einer 7 x 7-Matrix angeordnet. In Fig. 4 ist eine 8 x 4-Matrix, in Fig. 5 eine 6 x 4-Matrix, und in Fig. 6 eine 11 x 7-Matrix für die Anordnung der Verschleißsensoren 121 gezeigt.

In Bezug auf die Sensorplatten 1 gemäß der Fig. 5 und 6 wird hervorgehoben, dass diese im Unterschied zu den Ausführungsformen von Fig. 1, 3 und 4 nicht quadratisch, sondern rechteckig ausgebildet sind. Jedenfalls wird anhand der gezeigten Beispiele für die Matrix-Anordnung bei den Ausführungsformen der Fig. 5 und 6 deutlich, dass mit dem größeren Wert für den Parameter m als im Vergleich zum Parameter n erreicht wird, dass die resultierende Matrix- Anordnung der Verschleißsensoren 121 an die (rechteckige) Umfangskontur der der Sensorplatte 1 angepasst ist.

An dieser Stelle wird hervorgehoben, dass es sich bei den hier gezeigten Beispielen gemäß Fig. 1 und der Fig. 3-6 für die Matrix-Anordnungen der Verschleißsensoren 121 nur um Beispiele handelt. Insbesondere verhält es sich so, dass die mögliche Anzahl von Verschleißsensoren 121 in vertikaler Richtung (= Parameter m) bzw. in horizontaler Richtung (= Parameter n) wesentlich größer als die Beispiele der Fig. 1 und Fig. 3-6 sein kann, wenn von dem verfügbaren Zahlenbereich, der bis zum Wert 100 reicht, Gebrauch gemacht wird.

Die Vorrichtung 100 ist in Zusammenschau mit der Sensorplatte 1 ebenfalls in Fig. 1 gezeigt. Die Vorrichtung 20 umfasst eine Auswerteeinrichtung A, die über eine Signalstrecke S mit den Verschleißsensoren 121 in Signalverbindung steht. Entsprechend können die Signalwerte der einzelnen Messsensoren von der Auswerteeinrichtung A empfangen werden.

Die Auswerteeinrichtung A ist mit einem Kommunikationsmodul K ausgerüstet. Hierdurch ist es möglich, die von der Auswerteeinrichtung A empfangenen Daten über einen weitere Signalstrecke S an ein zentrales Rechnersystem, nachfolgend Zentralsystem Z genannt, zu senden, das eine Speichereinheit 5 und eine Auswerteeinheit 6 umfasst. In der Fig. 1 sind die genannten Signalstrecken S jeweils mit punktierten Linien symbolisiert.

Die Sensorplatte 1 kann mit einem maschinenlesbaren Datenspeicher 7 ausgestattet sein, in dem die Messwerte insbesondere der Verschleißsensoren 121 (zwischen-)gespeichert werden können. Des Weiteren kann die Sensorplatte 1 mit einer Sendeeinheit 8 ausgerüstet sein, beispielsweise um die in dem Datenspeicher 7 gespeicherten Messwerte der Verschleißsensoren 121 an die Auswerteeinrichtung A zu senden. Alternativ hierzu kann die Sendeeinheit 8 unmittelbar mit den Verschleißsensoren 121 in Signalverbindung stehen, wobei dann im Walzbetrieb die Mess- bzw. Signalwerte der Messsensoren 10 von der Sendeeinheit 8 unmittelbar an die Auswerteeinrichtung A versendet werden.

Die Sensorplatte 1 kann mit einem Datenträger 9 mit maschinenlesbarer Kennung ausgerüstet sein. Mittels eines solchen Datenträgers 9 ist es möglich, die Sensorplatte 1 in einem Walzgerüst sowohl eindeutig zu identifizieren als auch deren Position innerhalb des Walzgerüsts entsprechend zu lokalisieren.

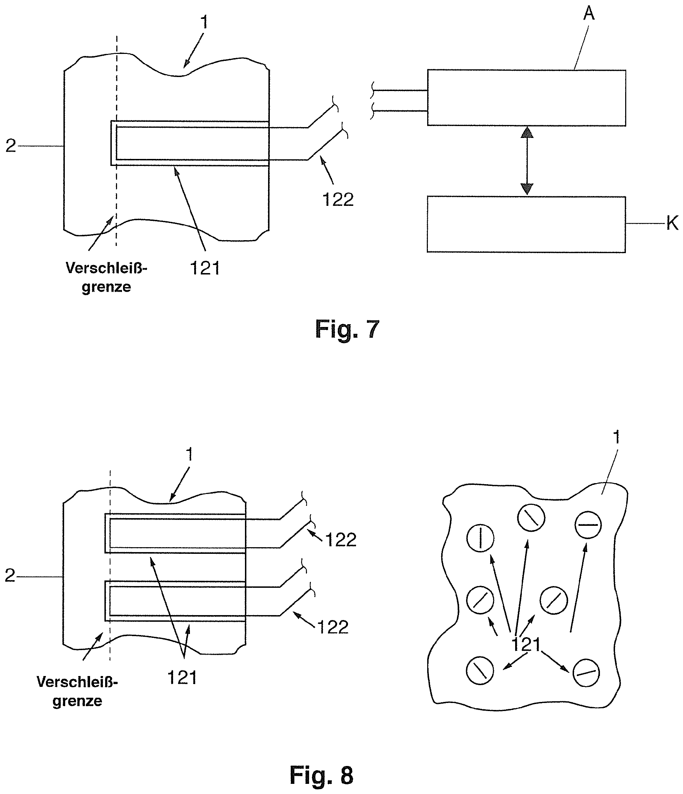

Nachfolgend sind unter Bezugnahme auf die Fig. 7-16 weitere Details bezüglich der Verschleißsensoren 121 und deren Funktionsweise erläutert:
Fig. 7 zeigt den unteren Bereich der Sensorplatte 1 von Fig. 2. Hierbei ist zu erkennen, dass ein elektrischer Leiter 122 (in Form einer geschlossenen Leiterbahn) des Verschleißsensors 121 nicht bis zur Gleitlagerfläche 2 geführt ist, sondern an einer vorbestimmten Verschleißgrenze endet, hier vereinfacht durch eine gestrichelte Linie symbolisiert und parallel zur Gleitlagerfläche 2 verlaufend. Der elektrische Leiter 122 steht wie erläutert in Signalverbindung mit der Auswerteeinrichtung A.

Das längliche Rechteck, in dem bei der Ausführungsform von Fig. 7 der elektrische Leiter 121 innerhalb der Sensorplatte 1 verläuft, stellt eine Sensoreinheit dar. Das Grundmaterial der Sensoreinheit ist so ausgeführt, dass es mindestens die gleiche Härte wie die Sensorplatte 1 besitzt, idealerweise aber weicher ist, so dass es sich mindestens im gleichen Maße wie die Sensorplatte 1 abnutzt, wenn es an deren Gleitlagerfläche 2 im Walzbetrieb zu einem Materialabtrag kommt. Die Position der Leiterbahn bzw. des elektrischen Leiters 122 in der Sensoreinheit ist möglichst exakt definiert, da hierüber u. a. die Auflösung des Verschleißes der Sensorplatte 1 bestimmt wird, und muss zumindest teilweise möglichst parallel zu der zu messenden Oberfläche in Form der Gleitlagerfläche 2 ausgerichtet sein.

Die Querschnittsansicht der Sensorplatte 1 gemäß Fig. 8 verdeutlicht die gleichmäßige bzw. regelmäßige Anordnung von zwei Sensoreinheiten mit den Verschleißsensoren 121.

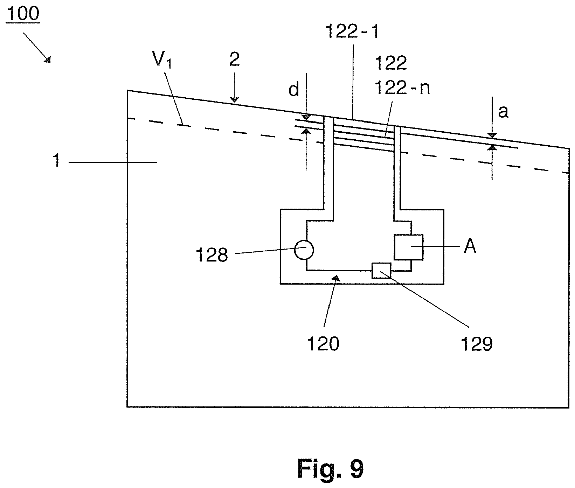

Fig. 9 zeigt die Vorrichtung 100 in einer weiteren prinzipiellen Darstellung. Sie umfasst eine Messeinrichtung 120, die bei der hier gezeigten Ausführungsform in einen Hohlraum innerhalb der Sensorplatte 1 integriert aufgenommen ist. Die Messeinrichtung 120 weist die bereits genannten Verschleißsensoren 121 auf, die in die Gleitlagerfläche 2 der Sensorplatte 1 integriert sind, um bei einem Verschleiß den Materialabtrag an der Gleitlagerfläche zu erfassen. Weiterhin umfasst die Messeinrichtung 120 die Auswerteeinrichtung A, die mit den Verschleißsensoren 121 in Signalverbindung steht. Entsprechend können die Signal- bzw. Messwerte der Verschleißsensoren 121 von der Auswerteeinrichtung A empfangen werden.

Darüber hinaus kann die Messeinrichtung 120 optional noch ein Modul 129 (vgl. Fig. 9) zur vorzugsweise kabellosen Übertragung von Messdaten oder von Auswertedaten, die von der Auswerteeinrichtung A erzeugt worden sind, an einen entfernten Ort zur Weiterverarbeitung der Daten aufweisen.

In Fig. 9 ist ferner verdeutlicht, dass der elektrische Widerstand bzw. Leiter 122 aus einer Mehrzahl N von elektrischen Leitern 122-n mit 1 ≤ n ≤ N gebildet ist, welche abschnittsweise parallel zueinander und parallel zu der Verschleißfläche in Form der Gleitlagerfläche 2 angeordnet sind. Der Abstand der einzelnen Leiter 122-n zu der ursprünglichen Verschleißfläche ist mit dem Buchstaben a bezeichnet. Das Bezugszeichen d bezeichnet hier den Abstand zweier benachbarter Leiter zueinander. Je geringer dieser Abstand ist, desto genauer ist die Auflösung, mit welcher ein Materialabtrag an der Verschleißfläche in Form der Gleitlagerfläche 2 erfasst werden kann.

Für die Funktionsweise der Verschleißsensoren 121 ist es von Bedeutung, dass der elektrische Leiter 122 stets in die abzutragende Verschleißfläche integriert ist, um selber mit abgetragen zu werden und um auf diese Weise selber eine Änderung seines Ohm'schen Widerstandswerte zu erfahren.

Die Ausgestaltung des elektrischen Leiters 122 gemäß Fig. 9 sieht vor, dass die elektrischen Leiter 122-n lediglich im Bereich der Gleitlagerfläche 2 parallel zu dieser und parallel zueinander ausgebildet sind.

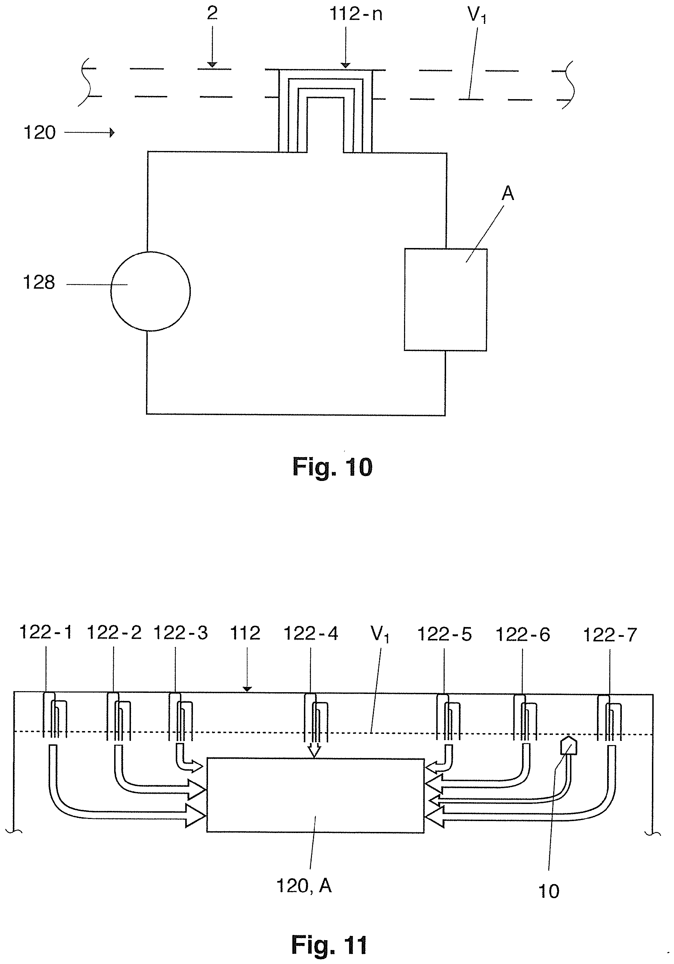

Im Zusammenhang mit den Verschleißsensoren 121 wird durch die Fig. 10 veranschaulicht, dass die Leiter bzw. Bahnbereiche 122-n des elektrischen Leiters 122, alternativ zur Ausführungsform von Fig. 9, auch U-förmig parallel zueinander angeordnet sein können.

Die Anordnung einer Mehrzahl von Verschleißsensoren 121 in Form einer (n x m)-Matrix, beispielsweise in Form einer 7 x 7-Matrix bei der Sensorplatte 1 gemäß Fig. 3, ist in Fig. 11 nochmals in einer Querschnittsansicht gezeigt. Hierbei ist es möglich, dass jedem der einzelnen Widerstände 122-k mit 1 ≤ k ≤ K = 7 eine eigene Messeinrichtung 120 zugeordnet ist. Alternativ, und wie in Fig. 11 gezeigt, ist es jedoch auch möglich, dass die einzelnen elektrische Widerstände 122-k jeweils über Kabelverbindungen an eine zentrale Messeinrichtung 120 und insbesondere an die zentrale Auswerteeinrichtung A (vgl. Fig. 1, Fig. 9, Fig. 10) angeschlossen sind.

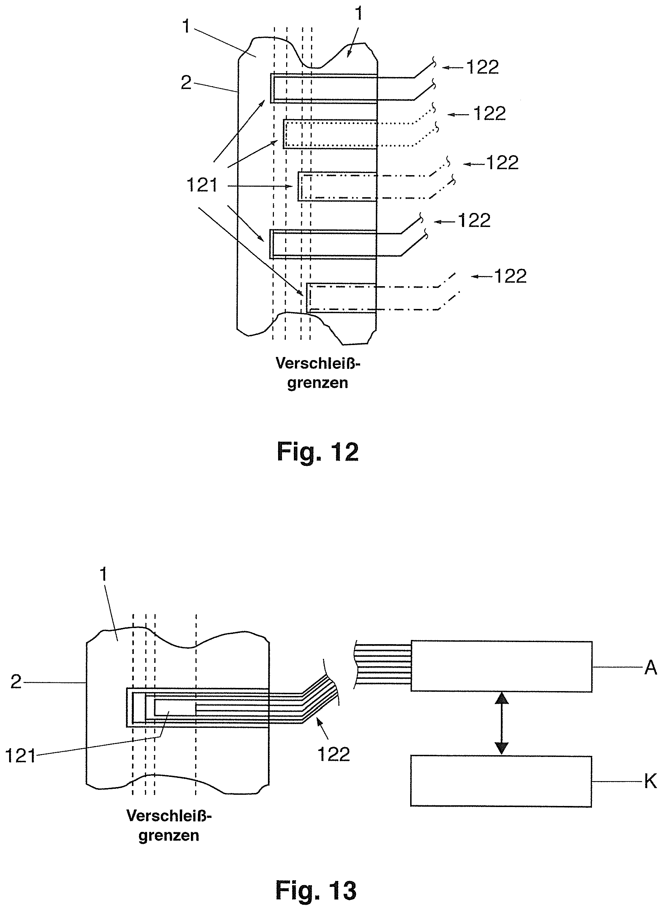

Die Fig. 12 zeigt einen Teil der Sensorplatte 1 in einer Querschnittsansicht. Hieraus ist ersichtlich, dass die elektrischen Leiter 122 in Form von Leiterbahnen jeweils in verschiedenen Tiefen bzw. in einem unterschiedlichen Abstand zur Gleitlagerfläche 2 in die Sensorplatte 1 integriert aufgenommen sind. Mit den vertikal verlaufenden gestrichelten Linien sind in der Darstellung von Fig. 12 verschiedene Verschleißgrenzen für die Gleitlagerfläche 2 symbolisiert. An diese verschiedenen Verschleißgrenzen sind die unterschiedlichen Tiefen, in denen die Leiterbahnen 122 jeweils in der Sensorplatte 1 aufgenommen sind, angepasst.

Zum Bestimmen eines Materialabtrags an der Gleitlagerfläche 2 in Bezug auf unterschiedliche Verschleißgrenzen kann auch vorgesehen sein, dass ein einziger Verschleißsensor 121 mit mehreren Leiterbahnen in jeweils unterschiedlichen "Tiefen", d.h. parallel verlaufenden Abständen zur Gleitlagerfläche bestückt ist. Ein solcher Typ eines Verschleißsensors ist vereinfacht in Fig. 13 gezeigt, der im Prinzip dem Verschleißsensor von Fig. 9 entspricht.

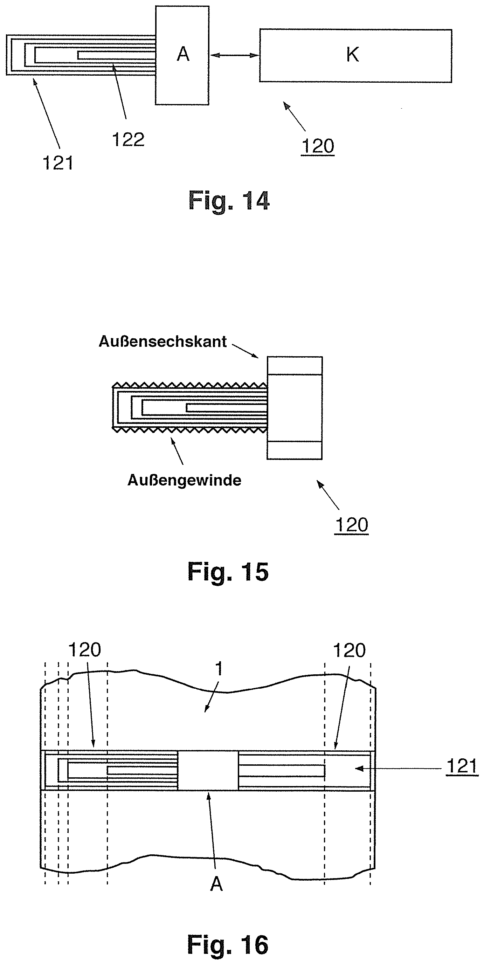

In Fig. 14 ist eine Messeinrichtung 120 mit einem Verschleißsensor 121 vom Typ der Ausführungsform von Fig. 13 gezeigt, hier jedoch in Form einer integrierten Einheit, die direkt die Auswerteeinrichtung A umfasst, die in Signalverbindung mit dem Kommunikationsmodul K steht. Bei der Ausführungsform von Fig. 14 kann auch vorgesehen sein, dass in der integrierten Einheit auch die Stromversorgung für die Leiterbahnen 122 des Verschleißsensors 121 untergebracht ist, so dass damit eine autarke mehrstufige Verschleißmessung ermöglicht wird.

Bei einer Weiterbildung dieser Ausführungsform der Messeinrichtung 120 können die soeben genannten Komponenten - ausweislich der Darstellung in Fig. 15 - beispielsweise in einem länglichen Stift integriert sein, der entlang seiner Längserstreckung mit einem Außengewinde versehen ist, dass von einem Außensechskant in Form eines Mutternkopfs abgeschlossen wird.

Fig. 16 zeigt eine Messeinrichtung 120 der erfindungsgemäßen Vorrichtung 100, bei der die Auswerteeinrichtung A mit zwei Sensoreinheiten (in Fig. 16 jeweils links und rechts der mittig gezeigten Auswerteeinrichtung A) verbunden ist. Hierdurch ist es möglich, den Verschleiß an mehreren Seiten der Sensorplatte 1 zu überwachen. Mit den vertikal verlaufenden gestrichelten Linien sind in der Darstellung von Fig. 16 verschiedene Verschleißgrenzen angedeutet, die jeweils einen unterschiedlichen Abstand zur Verschleißfläche in Form der Gleitlagerfläche 2 aufweisen.

Des Weiteren ist es auch denkbar, dass bei der Ausführungsform von Fig. 16 mehr als zwei Verschleißsensoren 121 mit der Auswerteeinrichtung A verbunden sind.

Erfindungsgemäß ist eine Sensorplatte 1 neben den Verschleißsensoren 121 auch mit Messsensoren 10 ausgestattet, die innerhalb der Sensorplatte 1 jeweils angrenzend zur Gleitlagerfläche 2 aufgenommen sind. Eine solche Sensorplatte ist in der Darstellung von Fig. 7 gezeigt, wobei die Messsensoren 10 hier jeweils mit kleinen Kreisen symbolisiert sind.

In Bezug auf die Messsensoren 10 ist hervorzuheben, dass diese nicht unmittelbar an der Gleitlagerfläche 2 der Sensorplatte 1 exponiert sind, wie nachfolgend noch erläutert ist.

Ausweislich der Draufsicht von Fig. 17 sind diese Messsensoren 10 bei dieser Ausführungsform in Form einer 7 x 7-Matrix angeordnet, nämlich angrenzend zur Gleitlagerfläche 2, und in dieser Weise versetzt zu den Verschleißsensoren 121 positioniert, die hier in Form einer 6 x 6-Matrix in die Gleitlagerfläche 2 integriert sind. Wichtig hierbei ist, dass die Messsensoren 10 nicht unmittelbar an der Gleitlagerfläche 2 exponiert sind, was zur Folge hat, dass bei einem Materialabtrag von der Gleitlagerfläche 2 im Walzbetrieb die Messsensoren 10 nicht geschädigt bzw. zerstört werden. Insoweit sind die Kreise, mit denen in der Darstellung von Fig. 17 die Messsensoren 10 in Form der Anordnung einer 6 x 6-Matrix symbolisiert sind, lediglich vereinfachend zu verstehen und sollen lediglich die Position dieser Messsensoren 10 angrenzend zur Gleitlagerfläche 2 veranschaulicht.

Die Anbringung der Messsensoren 10 an bzw. innerhalb der Sensorplatte 1 kann durch Sacklochbohrungen 11 erfolgen, die - ausweislich des oberen Bereichs der Querschnittsansicht von Fig. 18 - von einer der Gleitlagerfläche entgegengesetzten Rückseite 3 der Sensorplatte 1 darin eingebracht wird. Des Weiteren entspricht die Aufnahme der Leiterbahnen 122, die in der Querschnittsansicht von Fig. 18 mittig und im unteren Bereich der Sensorplatte 1 gezeigt sind, der Darstellung von Fig. 1, so dass zur Vermeidung von Wiederholungen darauf verwiesen werden darf.

Ein Messsensor 10 kann einen Dehnungsmessstreifen aufweisen, auch als DMS-Element bekannt, oder in Form eines solchen DMS-Elements 12 ausgebildet sein. Für diesen Fall kann ein DMS-Element 12an der Stirnseite einer Sacklochbohrung 11 und/oder an der Innenumfangsfläche einer solchen Sacklochbohrung 11 befestigt sein. Jedenfalls ist es mit einem Messsensor 10 möglich, Kräfte und/oder Dehnungen und/oder Verformungen zu detektieren, die auf die Sensorplatte 1 im Walzbetrieb einwirken.

Bei allen der vorstehend genannten Ausführungsform der erfindungsgemäßen Vorrichtung 20 kann vorgesehen sein, dass die Auswerteeinrichtung mit einer Energiequelle 128 ausgerüstet ist (vgl. Fig. 1, Fig. 11, Fig. 12). Eine solche Energiequelle 128 kann z.B. herkömmlich durch Batterien oder Akkus oder beispielsweise kabelgebunden ausgebildet sein. Alternativ hierzu ist es auch möglich, die Energiequelle als Energy-Harvesting-Einheit auszubilden, mit der Energie entweder thermisch und/oder mechanisch gewonnen werden kann.

Ungeachtet des Typs der Energiequelle 128 besteht eine weitere vorteilhafte Weiterbildung der Erfindung darin, dass mit dieser Energiequelle 128 nicht nur die Auswerteeinrichtung A gespeist wird, sondern auch die verschiedenen Sensoren der Sensorplatte 1, d.h. die Verschleißsensoren 121 und ggf. auch die Messsensoren 10, und des Weiteren auch die verschiedenen elektrische Bauelemente, die an einer Sensorplatte 1 vorgesehen oder daran angebracht sein können, beispielsweise der maschinenlesbare Datenspeicher 7, die Sendeeinheit 8 und/oder der Datenträger 9 mit maschinenlesbarer Kennung zur eindeutigen Identifikation der Sensorplatte 1. In dieser Weise handelt es sich dann bei der erfindungsgemäßen Vorrichtung 20 um ein energieautarkes System, das nicht auf eine externe separate Energiequelle angewiesen ist.

In Bezug auf die Energiequelle 128 kann nach einer weiteren (nicht gezeigten) Variante vorgesehen sein, dass die Energy-Harvesting-Einheit die angeschlossenen Systeme (Auswerteeinrichtung A und/oder Sensoreinheit mit den Verschleißsensoren 121) erst dann "zum Leben" erweckt, wenn ausreichend Energie für den Betrieb des Systems bzw. der Systeme zur Verfügung steht. Gerade für sehr langsam verschlei-ßende Bauteile kann diese Vorgehensweise angewendet werden.

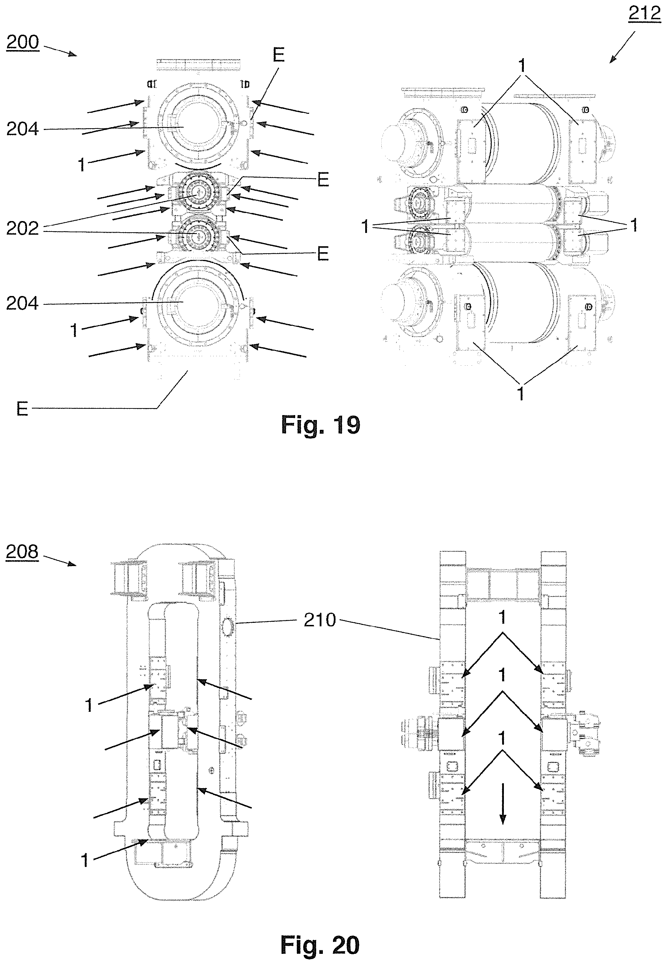

Fig. 19 zeigt ein Walzgerüst 200, mit zwei Arbeitswalzen 202 und zwei Stützwalzen 204 inklusive der zugehörigen Einbaustücke E. Durch die Vielzahl der einzelnen Pfeile, die in Fig. 19 (im linken Bild) jeweils in Richtung des Walzgerüsts gerichtet sind, sind die Positionen veranschaulicht, wo jeweils die Sensorplatten 1 vorgesehen bzw. an den zugeordneten Einbaustücken E angebracht sind.

Das rechte Bild von Fig. 19 zeigt das Walzgerüst 200 in vereinfachter perspektivischer Ansicht, wobei hier ein Walzensatz mit "212" bezeichnet ist. Des Weiteren sind im rechten Bild von Fig. 19 einige der hier vorgesehenen Platten mit "1" angezogen, wobei die an der Rückseite des Walzgerüsts hier nicht zu erkennen sind.

Fig. 20 zeigt einen Walzenständer 208, der für ein Walzgerüst 200 von Fig. 19 vorgesehen ist, jeweils in perspektivischer Ansicht (linkes Bild) und in einer Frontalansicht (rechtes Bild). In gleicher Weise wie bei Fig. 19 sind hier in Fig. 20 durch die Pfeile die Stellen angedeutet, an denen die Platten 1 an den Ständerholmen 210 des Walzenständers 208 befestigt sind.

Bei den Sensorplatten 1, deren Befestigungsstellen in Fig. 19 und Fig. 20 mit den einzelnen Pfeilen angedeutet sind, kann es sich um die Sensorplatten 1 nach Fig. 1-6 bzw. Fig. 17 handeln. Die Sensorplatten der Fig. 1-16 sind nicht erfindungsgemäß.

Die Fig. 21 zeigt ein Flussdiagramm zur Veranschaulichung eines erfindungsgemäßen Verfahrens mit seinen Schritten (i) bis (iv), bei dem vorzugsweise die vorstehend erläuterte erfindungsgemäße Vorrichtung 100 eingesetzt wird. Dank der Verschleißsensoren 121, die wie erläutert in die Gleitlagerfläche 2 einer Sensorplatte 1 integriert sind, kann der Verschleiß an der Gleitlagerfläche 2 der jeweiligen Sensorplatten 1 "online", d.h. im laufenden Walzbetrieb ermittelt bzw. gemessen werden. Die zugehörigen Verfahrensschritte (i) bis (iv) bestimmen sich wie folgt:
(i) Bestimmen eines Verschleißzustands an einer Sensorplatte 1, die an einem Einbaustück E einer Walze 202, 204 eines Walzgerüsts 200 befestigt ist, und einer aktuellen Geometrie (Topographie) der zugehörigen Gleitlagerfläche 2,
(ii) Bestimmen eines Verschleißzustands an einer Sensorplatte 1, die an einem Walzenständer 208 eines Walzgerüsts befestigt ist, und einer aktuellen Geometrie (Topographie) der zugehörigen Gleitlagerfläche,
(iii) Durchführen der Schritte (i) und (ii) für alle Sensorplatten 1, die an den Einbaustücken E von Walzen und an den Walzenständern 208 des Walzgerüsts 200 angebracht sind, und
(iv) Übertragen der Messwerte von Schritt (iii) an ein Zentralsystem Z mit einer Speicher- und Auswerteeinheit (5, 6), wobei diese Messwerte jeweils zu einem bestimmten Walzensatz, der aus einer bestimmten Walze, den dafür vorgesehenen Einbaustücken und der daran angebrachten Sensorplatte nach Anspruch 10 besteht, und zu einem bestimmten Walzenständer des Walzgerüsts mit einer Sensorplatte nach Anspruch 11 zugeordnet werden.

Der wesentliche Vorteil des soeben genannten ergänzenden Verfahrens zur Bestimmung des Verschleißzustandes an den Gleitlagerflächen 2 der Sensorplatten 1 liegt u.a. darin, dass der aktuelle Verschleißzustand bzw. die aktuelle Topographie von Sensorplatten für eine Paarung eines bestimmten Walzensatzes und eines bestimmten Walzenständers mit einem ersten vorbestimmten Grenzwert verglichen werden kann, noch während des Walzbetriebs. Falls hierbei dieser erste vorbestimmte Grenzwert überschritten wird, kann zumindest ein Warnsignal zur Veranlassung einer Überprüfung des Walzgerüsts und/oder des Walzensatzes ausgelöst werden. Im Zuge dessen ist auch die Festlegung eines zweiten vorbestimmten Grenzwertes möglich, bei dessen Überschreitung dann zumindest ein Warnsignal für einen Betriebsstopp des Walzgerüsts ausgelöst wird oder ggf. auch automatisch ein Notstopp für die Walzanlage eingeleitet wird.

An dieser Stelle wird nochmals darauf hingewiesen, dass es sich bei dem Merkmal "Walzensatz" handeln kann um:
- eine Einheit gebildet aus Walzen, Einbaustücken und daran befestigten Sensorplatten,
- eine Einheit gebildet aus Arbeits-, Stütz- und Zwischenwalze sowie die zugehörigen Einbaustücke und daran befestigter Sensorplatten, und/oder
- Vielwalzen-Gerüste.

Ebenfalls wird darauf hingewiesen, dass Walzensätze, beispielsweise bei einem Umrüsten eines Walzgerüsts während einer Produktionsunterbrechung, mit neuen bzw. anderen Einbaustücken versehen werden können. Anders ausgedrückt, ist es beispielsweise bei einem Umrüsten möglich, die vorstehend genannten Beispiele von Walzensätzen jeweils neu zusammenzustellen bzw. zu konfigurieren, nämlich durch die Montage von anderen Einbaustücken mit den daran angebrachten Sensorplatten an einer bestimmten Walze.

Die Durchführung des vorstehend genannten Verfahrens und dessen Schritt (iv) empfehlen sich insbesondere dann, wenn ein Betrieb des Walzgerüsts 200 zur Vorbereitung eines Umrüstens gestoppt wird. Im Sinne der vorliegenden Erfindung ist mit einem "Umrüsten" beispielsweise der Austausch von Walzensätzen (= Walzen plus Einbaustücke E inklusive der daran befestigten Sensorplatten 1) gemeint, um geänderte Produktionsbedingungen zu realisieren. Jedenfalls können damit dann Verschleißdaten für den Gleitlagerflächen 2 der einzelnen Sensorplatten 1 generiert werden, die den aktuellen Zustand bzw. "letzten Stand der Dinge" der Sensorplatten 1 vor dem Betriebsstopp darstellen.

Schließlich können unter Berücksichtigung dessen, dass wie soeben erläutert mittels der Verschleißsensoren 121 Verschleißdaten in Bezug auf die Gleitlagerflächen 2 der Sensorplatten 1 gewonnen werden können, geeignete Maßnahmen zur Produktionsplanung für zumindest ein Walzgerüst oder für eine Mehrzahl von Walzgerüsten, insbesondere in Form von Grobblechgerüsten, Vielwalzen-Gerüsten oder in Form einer Warm- oder Kaltwalzstraße getroffen werden, nämlich durch die Abfolge von folgenden Schritten:
(i) Bereitstellen von Messwerten in Bezug auf den Verschleißzustand von Sensorplatten 1 und der resultierenden Topographie an deren Gleitlagerflächen 2, welche Messwerte bestimmten Walzensätzen 212 und bestimmten Walzenständern 208 einer Walzstraße zugeordnet sind und in der Speichereinheit 5 des Zentralsystems Z insbesondere mit dem Verfahren nach Anspruch 20 gespeichert worden sind, durch die Auswerteeinheit 6 des Zentralsystems Z (vgl. Fig. 1),
(ii) Auslesen der Messwerte von Schritt (i) durch die Auswerteeinheit 6 des Zentralsystems Z,
(iii) Vergleichen der Topographie bzw. aktuellen Geometrie der Gleitlagerflächen 2 einerseits von bestimmten Einbaustücken (E) und andererseits von bestimmten Walzenständern 208 eines Walzgerüsts 200, und
(iv) Zuweisen eines bestimmten Walzensatzes, der insbesondere aus einer Walze (202; 204), den dafür vorgesehenen Einbaustücken (E) sowie den daran angebrachten Sensorplatten (1) besteht, zu einem bestimmten Walzenständer in Abhängigkeit von den geplanten neuen Produktionsbedingungen und in Abhängigkeit davon, dass in Schritt (iii) eine Übereinstimmung der Topographie der Gleitlagerflächen einerseits der Sensorplatte eines bestimmten Einbaustücks und andererseits eines bestimmten Walzenständers (208) einer Walzstraße festgestellt worden ist.

In Bezug auf die Schritte (iii) und (iv) des soeben genannten Verfahrens darf erläuternd hervorgehoben werden, dass es im Zuge der Produktionsplanung, wenn ein Walzgerüst mit neuen bzw. anderen Walzen bestückt werden soll, auch möglich ist, Einbaustücke in Verbindung mit den daran angebrachten Sensorplatten von den Walzen zu demontieren. Im Anschluss daran kann geprüft werden, welche Einbaustücke für welchen Typ bzw. welche Größe von Walze geeignet bzw. zulässig sind, wobei sodann, auf Grundlage des Schritts (iii), ermittelt wird, ob für ein solch zulässiges Einbaustück E und die daran befestigte Sensorplatte 1 auch ein passender "matching partner" in Form einer an einem Walzenständer 208 befestigten anderen Sensorplatte 1 existiert, sofern die Gleitlagerflächen der jeweiligen Sensorplatten mit ihren (Verschleiß-)Topographien zueinander passen. Falls sich solche "matching partner" in Bezug auf die Sensorplatten 1 finden, dann kann ein Einbaustück mit der daran angebrachten passenden Sensorplatte an der geplanten Walze montiert und zu einem Walzensatz komplettiert werden, der dann gemäß Schritt (iv) des hier zur Diskussion stehenden Verfahrens zu einem bestimmten Walzenständer mit der daran passenden Sensorplatte zugewiesen wird.

Der Schritt (iv) des soeben genannten Verfahrens bzw. der Schrittabfolge für die Produktionsplanung wird mit dem Ziel durchgeführt, durch die definierten Paarungen von Walzenständern und Walzensätzen, bezüglich derer die Topographie der Gleitlagerflächen 2 der zugehörigen Sensorplatten 1 übereinstimmen, möglichst optimale Produktionsbedingungen herzustellen bzw. zu erreichen. Falls es gelingt, zueinander passende Paarungen von Walzenständern und Walzensätzen aufzufinden, kann zum einen ein ansonsten kostspieliges Überarbeiten oder gar Austauschen von Sensorplatten 1 zumindest aufgeschoben werden. Zum anderen werden so bestmögliche Produktionsbedingungen durch den Einsatz der genannten "matching-partner" geschaffen.

### Bezugszeichenliste

- 1: Sensorplatte
- 2: Gleitlagerfläche (= Verschleißfläche)
- 3: Rückseite (der Sensorplatte 1)
- 4: seitliche Randfläche (der Sensorplatte 1)
- 5: Speichereinheit
- 6: Auswerteeinheit
- 7: maschinenlesbarer Datenspeicher
- 8: Sendeeinheit
- 9: Datenträger mit maschinenlesbarer Kennung, zur eindeutigen Identifikation einer Sensorplatte 1
- 10: Messsensor(en)
- 11: Sacklochbohrung
- 12: DMS-Element
- 20: Vorrichtung zum Bestimmen der Lage und/oder der Position einer Walze in einem Walzgerüst
- 100: Vorrichtung zum Messen eines Verschleißzustands
- 120: Messeinrichtung
- 121: Verschleißsensor(en)
- 122: elektrische(r) Leiter
- 128: Energiequelle
- 129: Modul zur Datenübertragung
- 200: Walzgerüst
- 202: Arbeitswalze(n)
- 204: Stützwalze(n)
- 208: Walzenständer
- 210: Ständerholm
- 212: Walzensatz
- a, b: ganzzahlige Parameter aus dem Bereich {1-100}
- m, n: ganzzahlige Parameter aus dem Bereich {1-100}
- A: Auswerteeinrichtung
- E: Einbaustück
- K: Kommunikationsmodul
- S: Signalstrecke
- V₁: erste Verschleißgrenze
- V₂: zweite Verschleißgrenze
- Z: Zentralsystem
- α: (möglicher) Winkel zwischen zwei Walzenachsen 206

## Patentansprüche

1. Sensorplatte (1), die als Gleitlager- oder Führungselement für Walzgerüste (200) dient, umfassend mindestens eine mit einem Bauteil in Kontakt bringbare und in einem Betrieb eines Walzgerüsts (200) einem Verschleiß unterliegende Gleitlagerfläche (2) und zumindest einen Verschleißsensor (121), der zum Erfassen eines Materialabtrags an der Gleitlagerfläche (2) geeignet ist und hierzu einen elektrischen Widerstand umfasst, der aus mindestens einem elektrischen Leiter (122) gebildet ist, welcher vorzugsweise abschnittsweise parallel zu der Gleitlagerfläche (2) verlaufend angeordnet ist, wobei der Verschleißsensor (121) bei einem Materialabtrag an der Gleitlagerfläche (2) selber mechanisch mit abgetragen wird,
wobei die Sensorplatte (1) eine Mehrzahl von Verschleißsensoren (121) aufweist, die in Form einer (m x n)-Matrix angeordnet sind, wobei die Verschleißsensoren (121) jeweils zumindest einen elektrischen Leiter (122) oder mehrere elektrische Leiter (122) umfassen, wobei jeder elektrische Leiter (122) mit einem Abschnitt hiervon parallel zur Gleitlagerfläche (2) verläuft und die Mehrzahl von elektrischen Leitern (122) jeweils verschiedene Abstände zur Gleitlagerfläche (2) aufweisen, wobei die Parameter m und/oder n zumindest den Zahlenwert von 2 oder einen Wert > 2 annehmen,
**dadurch gekennzeichnet,**
**dass** eine Mehrzahl von Messsensoren (10) vorgesehen sind, die in die Sensorplatte (1) integriert aufgenommen und in Form einer (a x b)-Matrix angrenzend zur Gleitlagerfläche (2) angeordnet sind, derart, dass die Messsensoren (10) einerseits nicht dem Verschleiß an der Gleitlagerfläche (2) unterworfen sind und andererseits in der Lage sind, die auf die Sensorplatte (1) wirkenden Kräfte und/oder Dehnungen und/oder Verformungen, die in Folge eines Flächen-, Linien- oder Punktkontakts der Sensorplatte (1) mit dem Bauteil entstehen, zu erfassen, wobei die Parameter a und b, mit denen die (a x b)-Matrix für die Anordnung der Messsensoren (10) gebildet ist, jeweils aus ganzzahligen Werten bestehen, die aus dem Zahlenbereich {1-100} gewählt sind.

2. Sensorplatte (1) nach Anspruch 1, **dadurch gekennzeichnet, dass** der elektrische Widerstand eines Verschleißsensors (121) aus einer Mehrzahl elektrischer Leiter (122) gebildet ist, welche vorzugsweise zumindest abschnittsweise parallel und in unterschiedlichen Tiefen in Bezug auf die Gleitlagerfläche (2) angeordnet sind.

3. Sensorplatte (1) nach Anspruch 1 oder 2, **dadurch gekennzeichnet, dass** in der Sensorplatte (1) eine Mehrzahl von Sacklochbohrungen (11) ausgebildet sind, die in die Sensorplatte (1) von einer der Gleitlagerfläche (2) entgegengesetzten Hauptfläche (3) her und/oder von einer seitlichen Randfläche (4) her eingebracht sind, wobei die Messsensoren (10) in den jeweiligen Sacklochbohrungen (11) eingesetzt sind.

4. Sensorplatte (1) nach einem der vorhergehenden Ansprüche, **dadurch gekennzeichnet, dass** die Parameter m und n, mit denen die (m x n)-Matrix für die Anordnung der Verschleißsensoren (121) gebildet ist, und die Parameter a und b, mit denen die (a x b)-Matrix für die Anordnung der Messsensoren (10) gebildet ist, jeweils aus ganzzahligen Werten bestehen, derart, dass damit die Matrix-Anordnung der Verschleißsensoren (121) bzw. Messsensoren (10) an die Umfangskontur der Sensorplatte (1) angepasst ist.

5. Sensorplatte (1) nach einem der vorhergehenden Ansprüche, **dadurch gekennzeichnet, dass** die Parameter m und n, mit denen die (m x n)-Matrix für die Anordnung der Sensoren gebildet ist, jeweils aus ganzzahligen Werten bestehen, die aus dem Zahlenbereich {1-100} , vorzugsweise aus dem Zahlenbereich {1-50}, weiter vorzugsweise aus dem Zahlenbereich {1-20} gewählt sind, vorzugsweise, dass die Verschleißsensoren (121) in Form einer 2 x 2-Matrix, in Form einer 3 x 2-Matrix, in Form einer 3 x 1-Matrix, in Form einer 3 x 3-Matrix, in Form einer 4 x 4-Matrix, in Form einer 5 x 5-Matrix, in Form einer 6 x 6-Matrix, in Form einer 6 x 4-Matrix, in Form einer 7 x 7-Matrix, in Form einer 8 x 8-Matrix, in Form einer 9 x 9-Matrix, in Form einer 10 x 10-Matrix, in Form einer 11 x 11-Matrix oder in Form einer 12 x 12-Matrix angeordnet sind.

6. Sensorplatte (1) nach einem der vorhergehenden Ansprüche, **dadurch gekennzeichnet, dass** die Parameter a und b, mit denen die (a x b)-Matrix für die Anordnung der Messsensoren (10) gebildet ist, jeweils aus ganzzahligen Werten bestehen, die aus dem Zahlenbereich {1-50}, vorzugsweise aus dem Zahlenbereich {1-20} gewählt sind, vorzugsweise, dass die Messsensoren (10) in Form einer 2 x 2-Matrix, in Form einer 3 x 2-Matrix, in Form einer 3 x 1-Matrix, in Form einer 3 x 3-Matrix, in Form einer 4 x 4-Matrix, in Form einer 5 x 5-Matrix, in Form einer 6 x 6-Matrix, in Form einer 6 x 4-Matrix, in Form einer 7 x 7-Matrix, in Form einer 8 x 8-Matrix, in Form einer 9 x 9-Matrix, in Form einer 10 x 10-Matrix, in Form einer 11 x 11-Matrix oder in Form einer 12 x 12-Matrix angeordnet sind.

7. Sensorplatte (1) nach einem der vorhergehenden Ansprüche, **gekennzeichnet durch** zumindest einen maschinenlesbaren Datenspeicher (7), in dem Signal- bzw. Messwerte der Verschleißsensoren (121) bzw. Messsensoren (10) speicherbar sind.

8. Sensorplatte (1) nach einem der vorhergehenden Ansprüche, **gekennzeichnet durch** einen Datenträger (9) mit einer maschinenlesbaren Kennung, mittels der die Sensorplatte (1) eindeutig identifizierbar ist, vorzugsweise, dass der Datenträger (9) aus einem RFID-Transponder, aus einem NFC (Near-Field-Communication)-Element und/oder aus einem QR-Code gebildet ist.

9. Sensorplatte (1) nach einem der vorhergehenden Ansprüche, **dadurch gekennzeichnet, dass** eine mit den Verschleißsensoren (121) bzw. Messsensoren (10) in Signalverbindung stehende Sendeeinheit (8) vorgesehen ist, mittels der die Messwerte der Sensoren über eine Funkstrecke oder kabelgebunden an eine Auswerteeinrichtung (A) übertragbar sind.

10. Sensorplatte (1) nach einem der vorhergehenden Ansprüche, **dadurch gekennzeichnet, dass** sie an einem Einbaustück (E) einer Walze (202; 204) eines Walzgerüsts (200) befestigt ist.

11. Sensorplatte (1) nach einem der Ansprüche 1 bis 9, **dadurch gekennzeichnet, dass** sie an einem Walzenständer (208) eines Walzgerüsts (200) befestigt ist.

12. Vorrichtung (100) zum Messen eines Verschleißzustands an der Gleitlagerfläche (2) einer Sensorplatte (1) nach einem der Ansprüche 1 bis 11, umfassend
eine Messeinrichtung (120), welche die Sensorplatte (1) nach einem der Ansprüche 1 bis 11 aufweist, um bei einem Verschleiß den Materialabtrag an der Gleitlagerfläche (2) zu erfassen, und
eine mit den Verschleißsensoren (121) bzw. Messsensoren (10) zumindest in Signalverbindung stehende Auswerteeinrichtung (A), von der die Signalwerte der Sensoren und insbesondere der einzelnen Verschleißsensoren (121) empfangbar sind,
wobei die Auswerteeinrichtung (A) programmtechnisch derart eingerichtet ist, dass damit eine Änderung, insbesondere einer Erhöhung, des Ohm'schen Widerstandswertes des elektrischen Leiters (122) eines bestimmten Verschleißsensors (121) in Abhängigkeit seines eigenen Materialabtrags erfassbar ist, um hierdurch einen Rückschluss von der erkannten Änderung des Widerstandwertes auf die Größe des Materialabtrags an der Gleitlagerfläche (2) und/oder auf die verbleibende Dicke der Gleitlagerfläche (2) an der Stelle dieses bestimmten Verschleißsensors (121) zu gewährleisten.

13. Vorrichtung (100) nach Anspruch 12, **gekennzeichnet durch** ein mit der Auswerteeinrichtung (A) in Signalverbindung stehendes Zentralsystem (Z) mit einer Speichereinheit (5) und Auswerteeinheit (6), wobei die Daten der Auswerteeinrichtung (A) an das Zentralsystem (Z) über eine Signalstrecke (S) übertragbar und darin auswertbar sind, vorzugsweise, dass die Auswerteeinrichtung (A) mit einem Kommunikationsmodul (K) ausgestattet ist, mit dem für die Auswerteeinrichtung (A) ein Datenaustausch mit dem Zentralsystem (Z) und/oder mit externen Kommunikationspartnern möglich ist.

14. Vorrichtung (100) nach Anspruch 12 oder 13, **dadurch gekennzeichnet, dass** die Auswerteeinrichtung (A) mit einer Energiequelle (128) ausgerüstet ist, wobei die Auswerteeinrichtung (A) zumindest mit den Sensoren und insbesondere den Verschleißsensoren (121) derart verbunden ist, dass die Verschleißsensoren (121) über die Energiequelle (128) mit Energie versorgt werden, vorzugsweise, dass die Energiequelle (128) weitere elektrische Bauelemente (7; 8; 9), die an einer Sensorplatte (1) nach einem der Ansprüche 8 bis 10 vorgesehen oder daran angebracht sind, mit Energie versorgt.

15. Vorrichtung (100) nach Anspruch 14, **dadurch gekennzeichnet, dass** die Energiequelle (128) in Form einer Energy-Harvesting-Einheit ausgebildet ist, vorzugsweise, dass die Energy-Harvesting-Einheit Energie thermisch und/oder mechanisch gewinnt.

16. Verfahren zum Messen eines Verschleißzustands von Gleitlager- oder Führungselementen im Betrieb eines Walzgerüsts (200), bei dem eine Vorrichtung (100) nach einem der Ansprüche 12 bis 15 eingesetzt wird, mit den Schritten:
(i) Bestimmen eines Verschleißzustands an einer Sensorplatte (1) nach Anspruch 10 und einer aktuellen Geometrie (Topographie) der zugehörigen Gleitlagerfläche (2),
(ii) Bestimmen eines Verschleißzustands an einer Sensorplatte (1) nach Anspruch 11 und einer aktuellen Geometrie (Topographie) der zugehörigen Gleitlagerfläche (2),
(iii) Durchführen der Schritte (i) und (ii) für alle Sensorplatten (1), die an den Einbaustücken (E) von Walzen und an den Walzenständern (208) des Walzgerüsts (200) angebracht sind,
(iv) Übertragen der Messwerte von Schritt (iii) an ein Zentralsystem (Z) mit einer Speicher- und Auswerteeinheit (6), wobei diese Messwerte jeweils zu einem bestimmten Walzensatz (212), der aus einer bestimmten Walze (202; 204), den dafür vorgesehenen Einbaustücken (E) und der daran angebrachten Sensorplatte (1) nach Anspruch 10 besteht, und zu einem bestimmten Walzenständer (208) des Walzgerüsts (200) mit einer Sensorplatte (1) nach Anspruch 11 zugeordnet werden.

17. Verfahren nach Anspruch 16, **dadurch gekennzeichnet, dass** der Schritt (iv) durchgeführt wird, bevor der Betrieb des Walzgerüsts (200) zur Vorbereitung eines Umrüstens gestoppt wird.

18. Verfahren nach Anspruch 16 oder 17, **dadurch gekennzeichnet, dass** der aktuelle Verschleißzustand bzw. die aktuelle Topographie von Sensorplatten (1) für eine Paarung bestehend aus einem bestimmten Walzensatz (212) und einem bestimmten Walzenständer (208) mit einem ersten vorbestimmten Grenzwert verglichen wird, wobei bei Überschreiten dieses ersten vorbestimmten Grenzwerts ein Warnsignal zur Veranlassung einer Überprüfung bzw. Wartung des Walzgerüsts (200) und/oder des Walzensatzes (212) ausgelöst wird, vorzugsweise, dass bei Überschreiten eines zweiten vorbestimmten Grenzwerts ein Warnsignal für einen Betriebsstopp des Walzgerüsts (200) ausgelöst wird.

19. Verfahren zur Produktionsplanung für zumindest ein Walzgerüst (200) oder für eine Mehrzahl von Walzgerüsten (200), insbesondere in Form von Grobblechgerüsten, Vielwalzen-Gerüsten oder einer Warm- oder Kaltwalzstraße, mit den Schritten:
(i) Bereitstellen von Messwerten in Bezug auf den Verschleißzustand von Sensorplatten (1) nach einem der Ansprüche 1 bis 11 und der resultierenden Topographie an deren Gleitlagerflächen (2), welche Messwerte bestimmten Walzensätzen (212) und bestimmten Walzenständern (208) einer Walzstraße zugeordnet sind und in der Speichereinheit (5) eines Zentralsystems (Z) mit dem Verfahren nach einem der Ansprüche 16 bis 18 gespeichert worden sind,
(ii) Auslesen der Messwerte von Schritt (i) durch eine Auswerteeinheit (6) des Zentralsystems (Z),
(iii) Vergleichen der Topographie bzw. aktuellen Geometrie der Gleitlagerflächen (2) einerseits von bestimmten Einbaustücken (E) und andererseits von bestimmten Walzenständern (208) eines Walzgerüsts (200), und
(iv) Zuweisen eines bestimmten Walzensatzes (212), der insbesondere aus einer Walze (202; 204), den dafür vorgesehenen Einbaustücken (E) sowie den daran angebrachten Sensorplatten (1) besteht, zu einem bestimmten Walzenständer (208) in Abhängigkeit von den geplanten neuen Produktionsbedingungen und in Abhängigkeit davon, dass in Schritt (iii) eine Übereinstimmung der Topographie der Gleitlagerflächen (2) einerseits der Sensorplatte (1) eines bestimmten Einbaustücks (E) und andererseits eines bestimmten Walzenständers (208) einer Walzstraße festgestellt worden ist.

## Claims

1. Sensor plate (1), which serves as a slide bearing element or guide element for roll stands (200), comprising at least one slide bearing surface (2), which can be brought into contact with a component and which in operation of a roll stand (200) is subject to wear, and at least one wear sensor (121), which is suitable for detection of material removal at the slide bearing surface (2) and for that purpose comprises an electrical resistance formed from at least one electrical conductor (122), which is preferably arranged to extend in sections parallel to the slide bearing surface (2), wherein the wear sensor (121) when material removal at the slide bearing surface (2) occurs, is itself mechanically abraded therewith,
wherein the sensor plate (1) comprises a plurality of wear sensors (121) arranged in the form of an (m x n) matrix, wherein the wear sensors (121) each comprise at least one electrical conductor (122) or a plurality of electrical conductors (122), wherein each electrical conductor (122) extends by a section thereof parallel to the slide bearing surface (2) and the plurality of electrical conductors (122) have respectively different spacings from the slide bearing surface (2), wherein the parameter m and/or parameter n adopts or adopt at least the numerical value 2 or a value > 2,
**characterised in that**
a plurality of measuring sensors (10) is provided, which are accommodated in the sensor plate (1) by integration and are arranged in the form of an (a x b) matrix adjacent to the slide bearing surface (2) in such a way that the measuring sensors (10) on the one hand are not subject to the wear at the slide bearing surface (2) and on the other hand are in a position of detecting the forces and/or expansions and/or deformations which act on the sensor plate (1) and which arise as a consequence of areal, lineal or punctiform contact of the sensor plate (1) with the component, wherein the parameters a and b by which the (a x b) matrix for the arrangement of the measuring sensors (10) is formed respectively consist of integral values selected from the numerical range {1-100}.

2. Sensor plate (1) according to claim 1, **characterised in that** the electrical resistance of a wear sensor (121) is formed from a plurality of electrical conductors (122) which are preferably arranged at least in sections parallel and at different depths with respect to the slide bearing surface (2).

3. Sensor plate (1) according to claim 1 or 2, **characterised in that** a plurality of blind bores (11) is formed in the sensor plate (1), the bores being introduced into the sensor plate (1) from a main surface (3) opposite to the slide bearing surface (2) and/or from a lateral edge surface (4), wherein the measuring sensors (10) are inserted into the respective blind bores (11).

4. Sensor plate (1) according to any one of the preceding claims, **characterised in that** the parameters m and n by which the (m x n) matrix for the arrangement of the wear sensors (121) is formed and the parameters a and b by which the (a x b) matrix for the arrangement of the measuring sensors (10) is formed each consist of integral values in such a way that the matrix arrangement of the wear sensors (121) or measuring sensors (10) is thereby adapted to the circumferential profile of the sensor plate (1).

5. Sensor plate (1) according to any one of the preceding claims, **characterised in that** the parameters m and n by which the (m x n) matrix for the arrangement of the sensors is formed each consist of integral values which are selected from the numerical range {1-100}, preferably from the numerical range {1-50}, more preferably from the numerical range {1-20}, preferably **in that** the wear sensors (121) are arranged in the form of a 2 x 2 matrix, in the form of a 3 x 2 matrix, in the form of a 3 x 1 matrix, in the form of a 3 x 3 matrix, in the form of a 4 x 4 matrix, in the form of a 5 x 5 matrix, in the form of a 6 x 6 matrix, in the form of a 6 x 4 matrix, in the form of a 7 x 7 matrix, in the form of an 8 x 8 matrix, in the form of a 9 x 9 matrix, in the form of a 10 x 10 matrix, in the form of an 11 x 11 matrix or in the form of a 12 x 12 matrix.

6. Sensor plate (1) according to any one of the preceding claims, **characterised in that** the parameters a and b by which the (a x b) matrix for the arrangement of the measuring sensors (10) is formed each consist of integral values which are selected from the numerical range {1-50}, preferably from the numerical range {1-20}, preferably **in that** the measuring sensors (10) are arranged in the form of a 2 x 2 matrix, in the form of a 3 x 2 matrix, in the form of a 3 x 1 matrix, in the form of a 3 x 3 matrix, in the form of a 4 x 4 matrix, in the form of a 5 x 5 matrix, in the form of a 6 x 6 matrix, in the form of a 6 x 4 matrix, in the form of a 7 x 7 matrix, in the form of an 8 x 8 matrix, in the form of a 9 x 9 matrix, in the form of a 10 x 10 matrix, in the form of an 11 x 11 matrix or in the form of a 12 x 12 matrix.

7. Sensor plate (1) according to any one of the preceding claims, **characterised by** at least one machine-readable data memory (7) in which signal values or measurement values of the wear sensors (121) or measuring sensors (10) can be stored.

8. Sensor plate (1) according to any one of the preceding claims, **characterised by** a data carrier (9) with a machine-readable identification by means of which the sensor plate (1) is uniquely identifiable, preferably in that the data carrier (9) is formed from an RFID transponder, from an NFC (Near-Field-Communication) element and/or from a QR code.

9. Sensor plate (1) according to any one of the preceding claims, **characterised in that** a transmitting unit (8), which is in signal connection with the wear sensors (121) or measuring sensors (10) and by means of which the measurement values of the sensors are transmissible by way of a radio link or by way of cable to an evaluating device (A), is provided.

10. Sensor plate (1) according to any one of the preceding claims, **characterised in that** it is secured to a chock (E) of a roll (202; 204) of a roll stand (200).

11. Sensor plate (1) according to any one of claims 1 to 9, **characterised in that** it is secured to a roll housing (208) of a roll stand (200).

12. Device (100) for measuring a wear state at the slide bearing surface (2) of a sensor plate (1) according to any one of claims 1 to 11, comprising a measuring device (120), which comprises the sensor plate (1) according to any one of claims 1 to 11, in order to detect material removal at the slide bearing surface (2) when wear occurs, and
an evaluating device (A), which is at least in signal connection with the wear sensors (121) or measuring sensors (10) and by which the signal values of the sensors and, in particular, the individual wear sensors (121) are receivable,
wherein the evaluating device (A) is programmed in such a way that a change, particularly an increase, in the resistive impedance value of the electrical conductor (122) of a specific wear sensor (121) is detectable in dependence on its own material removal so as to thereby ensure from the recognised change in the resistance value a conclusion about the amount of material removal at the slide bearing surface (2) and/or about the residual thickness of the slide bearing surface (2) at the location of this specific wear sensor (121).

13. Device (100) according to claim 12, **characterised by** a central system (Z), which is signal connection with the evaluating device (A), with a memory unit (5) and an evaluating unit (6), wherein the data of the evaluating device (A) are transmissible to the central system (Z) by way of a signal path (S) and evaluatable therein, preferably in that the evaluating device (A) is equipped with a communications module (K) by which a data exchange with the central system (Z) and/or with external communications partners is possible for the evaluating device (A).

14. Device (100) according to claim 12 or 13, **characterised in that** the evaluating device (A) is equipped with an energy source (128), wherein the evaluating device (A) is connected at least with the sensors, particularly the wear sensors (121), in such a way that the wear sensors (121) are supplied with energy by way of the energy source (128), preferably **in that** the energy source (128) supplies further electrical components (7; 8; 9), which are provided at a sensor plate (1) according to any one of claims 8 to 10 or mounted thereon, with energy.

15. Device (100) according to claim 14, **characterised in that** the energy source (128) is constructed in the form of an energy harvesting unit, preferably **in that** the energy harvesting unit obtains energy thermally and/or mechanically.

16. Method of measuring a wear state of slide bearing elements or guide elements in operation of a roll stand (200), in which a device (100) according to any one of claims 12 to 15 is used, comprising the steps:
(i) determining a wear state at a sensor plate (1) according to claim 10 and an instantaneous geometry (topography) of the associated slide bearing surface (2),
(ii) determining a wear state at a sensor plate (1) according to claim 11 and an instantaneous geometry (topography) of the associated slide bearing surface (2),
(iii) performing the steps (i) and (ii) for all sensor plates (1) which are mounted at the chocks (E) of rolls and at the roll housings (208) of the roll stand (200),
(iv) transmitting the measurement values of step (iii) to a central system (Z) with a storage and evaluating unit (6), wherein these measurement values are respectively assigned to a specific roll set (212), which consists of a specific roll (202; 204), the chocks (E) provided therefor and the sensor plate (1) according to claim 10 mounted thereon, and to a specific roll housing (208) of the roll stand (200) with a sensor plate (1) according to claim 11.

17. Method according to claim 16, **characterised in that** the step (iv) is carried out before operation of the roll stand (200) for preparation of a conversion is stopped.

18. Method according to claim 16 or 17, **characterised in that** the instantaneous wear state or the instantaneous topography of sensor plates (1) for a pairing consisting of a specific roll set (212) and a specific roll housing (208) is compared with a first predetermined limit value, wherein if this first predetermined limit value is exceeded a warning signal for causing checking or servicing of the roll stand (200) and/or the roll set (212) is triggered, preferably **in that** if a second predetermined limit value is exceeded a warning signal for stopping operation of the roll stand (200) is triggered.

19. Method for production planning for at least one roll stand (200) or for a plurality of roll stands (200), particularly in the form of heavy plate stands, multi-roll stands and/or a hot-rolling or cold-rolling train, comprising the steps:
(i) providing measurement values with respect to the wear state of sensor plates (1) according to any one of claims 1 to 11 and the resulting topography at the slide bearing surfaces (2) thereof, to which measurement values specific rolls sets (212) and specific roll housings (208) of a rolling train are assigned and have been stored in the memory unit (5) of a central system (Z) by the method according to any one of claims 16 to 18,
(ii) reading out the measurement values of step (i) by an evaluating unit (6) of the central system (Z),
(iii) comparing the topography or instantaneous geometry of the slide bearing surfaces (2) on the one hand of specific chocks (E) and on the other hand of specific roll housings (208) of a roll stand (200), and
(iv) allocating a specific roll set (212), which consists in particular of a roll (202; 204), the chocks (E) provided therefor and the sensor plates (1) mounted thereon, to a specific roll housing (208) in dependence on the planned new production conditions and in dependence on whether in step (iii) a correspondence of the topography of the slide bearing surfaces (2) on the one hand of the sensor plate (1) of a specific chock (E) and on the other hand of a specific roll housing (208) of a rolling train has been established.

## Revendications

1. Plaque de détection (1), qui sert de palier lisse ou d'élément de guidage pour des cages de laminoir (200), comportant au moins une surface de palier lisse (2) pouvant être mise en contact avec un composant et soumise à une usure pendant le fonctionnement d'une cage de laminoir (200) et au moins un capteur de détection d'usure (121) qui est adapté pour détecter un enlèvement de matière sur la surface de palier lisse (2) et qui comporte à cet effet une résistance électrique qui est formée d'au moins un conducteur électrique (122), qui est de préférence agencé par sections parallèlement à la surface de palier lisse (2), le capteur de détection d'usure (121) étant lui-même retiré mécaniquement lors d'un enlèvement de matière sur la surface de palier lisse (2),
dans laquelle la plaque de détection (1) comporte une pluralité de capteurs de détection d'usure (121) qui sont disposés sous la forme d'une matrice-(m x n), les capteurs de détection d'usure (121) comprenant chacun au moins un conducteur électrique (122) ou plusieurs conducteurs électriques (122), chaque conducteur électrique (122) s'étendant avec une section de celui-ci parallèlement à la surface de palier lisse (2) et la pluralité de conducteurs électriques (122) présentant respectivement des distances différentes par rapport à la surface de palier lisse (2), où les paramètres m et/ou n prennent au moins la valeur numérique de 2 ou une valeur > 2,
**caractérisée en ce qu'**il est prévu une pluralité de capteurs de mesure (10) qui sont intégrés dans la plaque de détection (1) et sont disposés sous la forme d'une matrice (a x b) adjacente à la surface de palier lisse (2), de manière à ce que les capteurs de mesure (10), d'une part, ne soient pas soumis à l'usure sur la surface de palier lisse (2) et, d'autre part, soient capables de mesurer les forces et/ou les allongements et/ou les déformations agissant sur la plaque de détection (1) qui se produisent à la suite d'un contact superficiel, linéaire ou ponctuel de la plaque de détection (1) avec le composant, les paramètres a et b, avec lesquels la matrice (a x b) est formée pour l'agencement des capteurs de mesure (10), étant constitués respectivement de valeurs entières choisies dans la plage numérique {1-100}.

2. Plaque de détection (1) selon la revendication 1, **caractérisée en ce que** la résistance électrique d'un capteur de détection d'usure (121) est formée d'une pluralité de conducteurs électriques (122), qui sont de préférence agencés au moins par sections parallèlement et à différentes profondeurs par rapport à la surface de palier lisse (2).

3. Plaque de détection (1) selon la revendication 1 ou 2, **caractérisée en ce qu'**une pluralité d'alésages borgnes (11) sont formés dans la plaque de détection (1), ces alésages borgnes étant pratiqués dans la plaque de détection (1) à partir d'une surface principale (3) opposée à la surface de palier lisse (2) et/ou à partir d'un bord latéral (4), les capteurs de mesure (10) étant insérés dans les alésages borgnes (11) respectifs.

4. Plaque de détection (1) selon l'une des revendications précédentes, **caractérisée en ce que** les paramètres m et n, avec lesquels la matrice (m x n) est formée pour l'agencement des capteurs de détection d'usure (121), et les paramètres a et b, avec lesquels la matrice (a x b) est formée pour l'agencement des capteurs de mesure (10), sont constitués respectivement de valeurs entières, de telle sorte que l'agencement matriciel des capteurs de détection d'usure (121) ou des capteurs de mesure (10) est adapté au contour périphérique de la plaque de détection (1).

5. Plaque de détection (1) selon l'une des revendications précédentes, **caractérisée en ce que** les paramètres m et n, avec lesquels la matrice-(m x n) est formée pour l'agencement des capteurs, sont constitués respectivement de valeurs entières choisies dans la plage numérique {1-100}, de préférence dans la plage numérique {1-50}, plus préférablement dans la plage numérique {1-20}, de préférence **caractérisée en ce que** les capteurs de détection d'usure (121) se présentent sous la forme d'une matrice 2 x 2, sous la forme d'une matrice 3 x 2, sous la forme d'une matrice 3 x 1, sous la forme d'une matrice 3 x 3, sous la forme d'une matrice 4 x 4, sous la forme d'une matrice 5 x 5, sous la forme d'une matrice 6 x 6, sous la forme d'une matrice 6 x 4, sous la forme d'une matrice 7 x 7, sous la forme d'une matrice 8 x 8, sous la forme d'une matrice 9 x 9, sous la forme d'une matrice 10 x 10, sous la forme d'une matrice 11 x 11 ou sous la forme d'une matrice 12 x 12.

6. Plaque de détection (1) selon l'une des revendications précédentes, **caractérisée en ce que** les paramètres a et b, avec lesquels la matrice-(a x b) est formée pour l'agencement des capteurs de mesure (10), sont constitués respectivement de valeurs entières choisies dans la plage numérique {1-50}, de préférence dans la plage numérique {1-20}, de préférence **en ce que** les capteurs de mesure (10) se présentent sous la forme d'une matrice 2 x 2, sous la forme d'une matrice 3 x 2, sous la forme d'une matrice 3 x 1, sous la forme d'une matrice 3 x 3, sous la forme d'une matrice 4 x 4, sous la forme d'une matrice 5 x 5, sous la forme d'une matrice 6 x 6, sous la forme d'une matrice 6 x 4, sous la forme d'une matrice 7 x 7, sous la forme d'une matrice 8 x 8, sous la forme d'une matrice 9 x 9, sous la forme d'une matrice 10 x 10, sous la forme d'une matrice 11 x 11 ou sous la forme d'une matrice 12 x 12.

7. Plaque de détection (1) selon l'une des revendications précédentes, **caractérisée par** au moins une mémoire de données (7) lisible par machine, dans laquelle des valeurs de signal ou de mesure des capteurs de détection d'usure (121) ou des capteurs de mesure (10) peuvent être mémorisées.

8. Plaque de détection (1) selon l'une des revendications précédentes, **caractérisée par** un support de données (9) avec un identifiant lisible par machine, au moyen duquel la plaque de détection (1) peut être identifiée de manière univoque, de préférence le support de données (9) étant formé d'une étiquette RFID, d'un élément NFC (Near-Field Communication) et/ou d'un code QR.

9. Plaque de détection (1) selon l'une des revendications précédentes, **caractérisée en ce qu'**elle comporte une unité d'émission (8) reliée en liaison de signal avec les capteurs de détection d'usure (121) ou les capteurs de mesure (10), au moyen de laquelle les valeurs de mesure des capteurs peuvent être transmises à un dispositif d'évaluation (A) par une liaison radio ou par câble.

10. Plaque de détection (1) selon l'une des revendications précédentes, **caractérisée en ce qu'**elle est fixée sur une empoise (E) d'un cylindre (202 ; 204) d'une cage de laminoir (200).

11. Plaque de détection (1) selon l'une des revendications 1 à 9, **caractérisée en ce qu'**elle est fixée sur un montant (208) d'une cage de laminoir (200).

12. Dispositif (100) conçu pour mesurer un état d'usure de la surface de palier lisse (2) d'une plaque de détection (1) selon l'une des revendications 1 à 11, comprenant un dispositif de mesure (120), qui comporte la plaque de détection (1) selon l'une des revendications 1 à 11, permettant de détecter l'enlèvement de matière sur la surface de palier lisse (2) en cas d'usure, et un dispositif d'évaluation (A) qui est au moins en liaison de signal avec les capteurs de détection d'usure (121) ou les capteurs de mesure (10) et qui permet de recevoir les valeurs de signal des capteurs et en particulier des différents capteurs de détection d'usure (121),
le dispositif d'évaluation (A) étant programmé de telle sorte qu'il permette de détecter une modification, notamment une augmentation, de la valeur de résistance ohmique du conducteur électrique (122) d'un capteur de détection d'usure (121) en fonction de son propre enlèvement de matière, pour permettre ainsi de déduire, à partir de la variation détectée de la valeur de résistance, l'importance de l'enlèvement de matière sur la surface de palier lisse (2) et/ou sur l'épaisseur restante de la surface de palier lisse (2) à l'emplacement de ce capteur de détection d'usure déterminé (121).

13. Dispositif (100) selon la revendication 12, **caractérisé par** un système central (Z) qui est en liaison de signal avec le dispositif d'évaluation (A) et comportant une unité de mémoire (5) et une unité d'évaluation (6), les données provenant du dispositif d'évaluation (A) pouvant être transmises au système central (Z) par l'intermédiaire d'une voie de transmission de signaux (S), le dispositif d'évaluation (A) étant équipé d'un module de communication (K), qui permet au dispositif d'évaluation (A) d'échanger des données avec le système central (Z) et/ou avec des partenaires de communication externes.

14. Dispositif (100) selon la revendication 12 ou 13, **caractérisé en ce que** le dispositif d'évaluation (A) est équipé d'une source d'énergie (128), le dispositif d'évaluation (A) étant relié au moins aux capteurs et en particulier aux capteurs de détection d'usure (121) de telle sorte que les capteurs de détection d'usure (121) sont alimentés en énergie par la source d'énergie (128), de préférence **en ce que** la source d'énergie (128) alimente en énergie d'autres composants électriques (7 ; 8 ; 9) qui sont prévus sur une plaque de détection (1) selon l'une des revendications 8 à 10 ou qui sont montés sur celle-ci.

15. Dispositif (100) selon la revendication 14, **caractérisé en ce que** la source d'énergie (128) est réalisée sous la forme d'une unité de récupération d'énergie, de préférence **en ce que** l'unité de récupération d'énergie récupère de l'énergie thermiquement et/ou mécaniquement.

16. Procédé de mesure d'un état d'usure d'éléments de paliers lisses ou d'éléments de guidage pendant le fonctionnement d'une cage de laminoir (200), mettant en oeuvre un dispositif (100) selon l'une des revendications 12 à 15, comprenant les étapes consistant à :
(i) déterminer un état d'usure sur une plaque de détection (1) selon la revendication 10 et une géométrie (topographie) actuelle de la surface de palier lisse (2) associée,
(ii) déterminer un état d'usure sur une plaque de détection (1) selon la revendication 11 et une géométrie (topographie) actuelle de la surface de palier lisse (2) associée,
(iii) effectuer les étapes (i) et (ii) pour toutes les plaques de détection (1) montées sur les empoises (E) des cylindres et sur les montants (208) de la cage de laminoir (200),
(iv) transmettre les valeurs de mesure de l'étape (iii) à un système central (Z) comportant une unité de mémoire et une unité d'évaluation (6), ces valeurs de mesure étant associées respectivement à un jeu de cylindres (212) déterminé, qui est constitué d'un cylindre (202 ; 204) déterminé, des empoises (E) prévues à cet effet et de la plaque de détection (1) qui y est fixée selon la revendication 10, et à un montant (208) déterminé de la cage de laminoir (200) comportant une plaque de détection (1) selon la revendication 11.

17. Procédé selon la revendication 16, **caractérisé en ce que** l'étape (iv) est effectuée avant que le fonctionnement de la cage de laminoir (200) ne soit arrêté pour préparer un rééquipement.

18. Procédé selon la revendication 16 ou 17, **caractérisé en ce que** l'état d'usure actuel ou la topographie actuelle des plaques de détection (1) pour une paire constituée d'un jeu de cylindres (212) déterminé et d'un montant de cylindre (208) déterminé est comparé à une première valeur limite prédéterminée, un signal d'avertissement étant déclenché en cas de dépassement de cette première valeur limite prédéterminée pour lancer une inspection ou une maintenance de la cage de laminoir (200) et/ou du jeu de cylindres (212), de préférence **en ce que**, en cas de dépassement d'une seconde valeur limite prédéterminée, un signal d'avertissement est déclenché pour provoquer un arrêt de fonctionnement de la cage de laminoir (200).

19. Procédé de planification de la production pour au moins une cage de laminoir (200) ou pour une pluralité de cages de laminoir (200), notamment sous la forme de cages de tôles fortes, de cages à plusieurs cylindres ou d'un train de laminage à chaud ou à froid, comprenant les étapes suivantes consistant à :
(i) fournir des valeurs de mesure relatives à l'état d'usure de plaques de détection (1) selon l'une des revendications 1 à 11 et à la topographie résultante sur leurs surfaces de palier lisse (2), lesdites valeurs de mesure étant associées à des jeux de cylindres (212) déterminés et à des montants de cylindres (208) déterminés d'un train de laminage et ont été stockées dans l'unité de mémoire (5) d'un système central (Z) utilisant le procédé selon l'une des revendications 16 à 18,
(ii) lire les valeurs de mesure de l'étape (i) au moyen d'une unité d'évaluation (6) du système central (Z)
(iii) comparer la topographie ou la géométrie actuelle des surfaces de palier lisse (2) d'une part de certaines empoises (E) et d'autre part de certains montants de cylindre (208) d'une cage de laminoir (200), et
(iv) attribuer un jeu de cylindres (212) déterminé, qui se compose notamment d'un cylindre (202 ; 204), des empoises (E) prévues à cet effet, ainsi que des plaques de détection (1) qui y sont fixées, à un montant de cylindre (208) déterminé, en fonction des nouvelles conditions de production envisagées et en fonction du fait qu'une concordance de la topographie des surfaces de palier lisse (2) d'une part de la plaque de détection (1) d'une empoise (E) déterminée et d'autre part d'un montant de cylindre (208) déterminé d'un train de laminage a été constatée à l'étape (iii).
